# EUROPÄISCHE PATENTSCHRIFT

(11) **EP 1 643 094 B1**
(45) Veröffentlichungstag und Bekanntmachung des Hinweises auf die Patenterteilung: **17.06.2009**
(21) Anmeldenummer: 05106871.6
(22) Anmeldetag: 26.07.2005
(51) Int. Cl.: F01N 3/20, F01N 3/30, F01N 3/36, F01N 3/38, F01N 5/02

(54) **Abgasanlage für eine Brennkraftmaschine und zugehöriges Betriebsverfahren**
Exhaust system for an internal combustion engine and corresponding operating method
Système d'échappement d'un moteur à combustion interne et procédé correspondent pour le faire fonctionner

(30) Priorität: 01.10.2004 DE 102004048335; 18.04.2005 DE 102005018032
(43) Veröffentlichungstag der Anmeldung: 05.04.2006
(73) Patentinhaber: J. Eberspächer GmbH & Co. KG, 73730 Esslingen (DE)
(72) Erfinder: Gaiser, Gerd, 72768, Reutlingen (DE)
(74) Vertreter: Bongen, Renaud & Partner

(56) Entgegenhaltungen:
- EP-A2- 1 421 987
- DE-A1- 3 920 159
- DE-A1- 4 340 463
- DE-A1- 19 514 369
- DE-A1- 19 963 643

## Beschreibung

Die vorliegende Erfindung betrifft eine Abgasanlage für eine Brennkraftmaschine, insbesondere in einem Kraftfahrzeug, mit den Merkmalen des Oberbegriffs des Anspruchs 1. Die Erfindung betrifft außerdem ein zugehöriges Betriebsverfahren.

Eine derartige Abgasanlage umfasst üblicherweise einen Abgasstrang, in dem zumindest ein Oxidationskatalysator zur Behandlung der von der Brennkraftmaschine kommenden Abgase angeordnet ist.

Wenn eine Brennkraftmaschine längere Zeit ausgeschaltet ist, nimmt sie einschließlich ihrer Komponenten, wie zum Beispiel die Abgasanlage, die Umgebungstemperatur an. Bei einem Start der insoweit abgekühlten Brennkraftmaschine, sogenannter Kaltstart, kommt es aufgrund der niedrigen Temperaturen innerhalb der beteiligten Komponenten zu einem erhöhten Schadstoffausstoß. Insbesondere zeigt der Oxidationskatalysator unterhalb seiner Betriebstemperatur keine oder nur eine deutlich reduzierte Oxidationswirkung für unverbrannte oder nicht vollständig verbrannte Kohlenwasserstoffe. Um immer strenger werdenden Umweltschutzbestimmungen gerecht werden zu können, ist es wünschenswert, die Kaltstartphase der Brennkraftmaschine möglichst kurz auszugestalten.

Aus der US 2004/0144083 A1 ist eine Abgasanlage der eingangs genannten Art bekannt. Sie umfasst einen Abgasstrang, in dem zur Behandlung der von der Brennkraftmaschine kommenden Abgase ein Oxidationskatalysator angeordnet ist. Die Abgasanlage umfasst ferner eine Pre-Oxidationseinheit sowie eine Sekundär-Kraftstoffversorgung. Die Pre-Oxidationseinheit ist an die Sekundär-Kraftstoffversorgung angeschlossen und so ausgestaltet, dass sie in einem Katalysatoraufheizbetrieb den zugeführten Sekundär-Kraftstoff in Verbindung mit einem Oxidator partiell oxidiert und die partiell oxidierten Zwischenprodukte dem Oxidationskatalysator zur vollständigen Oxidation zuführt. Die Pre-Oxidationseinheit enthält eine Verdampfereinrichtung, die den zugeführten Sekundär-Kraftstoff verdampft. Die bekannte Abgasanlage ist für eine Brennkraftmaschine vorgesehen, die mit Diesel als Kraftstoff betrieben werden soll. Gleichzeitig soll Benzin als Sekundär-Kraftstoff in einem außerhalb des Abgasstrangs angeordneten Reformer umgesetzt werden, um ein Reduktionsmittel zu generieren. Mit Hilfe dieses Reduktionsmittels soll ein NOX-Speicherkatalysator regeneriert werden, der im Abgasstrang angeordnet ist.

Aus der DE 39 20 159 A1 ist eine Abgasanlage bekannt, bei der stromauf eines Oxidationskatalysators eine Pre-Oxidationseinheit in Form eines zusätzlichen Oxidationskatalysators im Abgasstrang angeordnet ist. Dieser ist eine Sekundär-Kraftstoffversorgung vorgeschaltet. Bei einem Katalysatoraufheizbetrieb kann bei der bekannten Abgasanlage der Zusatz-Oxidationskatalysator elektrisch beheizt und auf seine Betriebstemperatur gebracht werden. Der eingebrachte Sekundär-Kraftstoff kann im Zusatz-Oxidationskatalysator umgesetzt werden, um so heiße Abgase zum Aufheizen des nachfolgend angeordneten Oxidationskatalysators zu bewirken.

Weitere Abgasanlagen sind der DE 199 63 643 A1 und der DE 195 14 369 A1 zu entnehmen, bei denen heiße Abgase zum Aufheizen des Oxidationskatalysators mit Hilfe eines katalytisch arbeitenden Brenners erzeugt werden.

Aus der EP 1 421 987 A2 ist ein aktives System zur Regeneration eines NOX-Speichers sowie eines Partikelfilters bekannt, das eine Kraftstoffquelle sowie einen damit verbundenen Reformer zur Erzeugung von Wasserstoff und Kohlenmonoxid aufweist. Ferner ist ein Oxidationskatalysator vorgesehen, der stromauf des NOX-Speichers angeordnet ist, der seinerseits stromauf des Partikelfilters angeordnet ist. Über entsprechende Ventile kann das Reformatgas dem NOX-Speicher und/oder dem Partikelfilter zugeführt werden, um die jeweilige Abgasbehandlungskomponente zu regenerieren.

Die vorliegende Erfindung beschäftigt sich mit dem Problem, für eine Abgasanlage bzw. für ein zugehöriges Betriebsverfahren eine verbesserte oder zumindest eine andere Ausführungsform anzugeben, die insbesondere eine Verkürzung der Kaltstartphase ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, Sekundär-Kraftstoff mit Hilfe einer Pre-Oxidationseinheit partiell zu oxidieren, um dann die so erzeugten teiloxidierten Zwischenprodukte dem Oxidationskatalysator zuzuführen. Durch die Teiloxidation, die mit Hilfe eines geeigneten Oxidators, zweckmäßig Sauerstoff aus Sekundär-Luft, kann ein hoch reaktives Gemisch aus teiloxidierten Zwischenprodukten erzeugt werden, das auch bei vergleichsweise niedrigen Temperaturen im Oxidationskatalysator umgesetzt bzw. vollständig oxidiert werden kann. Beispielsweise werden die langkettigen Kohlenwasserstoffe des Sekundär-Kraftstoffs, zum Beispiel Benzin oder Diesel, in vergleichsweise kurzkettige Kohlenwasserstoffe aufoxidiert, die eine erheblich größere Reaktivität aufweisen. Gleichzeitig wird bei der partiellen Oxidation Wärme frei, was bereits zu einer Temperaturerhöhung am Oxidationskatalysator führt. Die erhöhte Reaktivität des dem Oxidationskatalysator über den Abgasstrang zugeführten Gemischs führt dazu, dass das Gemisch im Oxidationskatalysator bei vergleichsweise niedrigen Temperaturen, die deutlich unterhalb der "normalen" Betriebstemperatur des Oxidationskatalysators liegen, umgesetzt werden kann, wodurch weitere Wärme freigesetzt wird, die ebenfalls die Temperatur des Oxidationskatalysators erhöht. Mit Hilfe der Erfindung kann somit die Temperatur des Oxidationskatalysators während eines Kaltstarts sehr schnell erhöht werden, wodurch dieser rasch seine Betriebstemperatur erreicht und die gewünschte Reinigungswirkung für die Abgase der Brennkraftmaschine entfalten kann. Durch die Verkürzung der Kaltstartphase für den Oxidationskatalysator kann die Schadstoffemission der Brennkraftmaschine beim Kaltstart reduziert werden.

Erfindungsgemäß ist die Abgasanlage hierzu so ausgestattet, dass die Pre-Oxidationseinheit im Abgasstrang stromauf des Oxidationskatalysators angeordnet ist und dabei so ausgestaltet ist, dass sie bei einem Kaltstart der Brennkraftmaschine zu Beginn des Katalysatoraufheizbetriebs den Sekundär-Kraftstoff vollständig oxidiert, wobei als Sekundär-Kraftstoff der gleiche Kraftstoff verwendet wird, der auch der Brennkraftmaschine zugeführt wird.

Gemäß einer besonders vorteilhaften Ausführungsform kann die Pre-Oxidationseinheit so ausgestaltet sein, dass als teiloxidiertes Zwischenprodukt gasförmiger Wasserstoff entsteht, der sich auch bei niedrigen Temperaturen durch eine besonders hohe Reaktivität auszeichnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine schaltplanartige Prinzipdarstellung einer Brennkraftmaschine, die mit einer Abgasanlage nach der Erfindung ausgestattet ist,
- Fig. 2: eine Ansicht wie in Fig. 1, jedoch bei einer anderen Ausführungsform,
- Fig. 3: eine stark vereinfachte Prinzipdarstellung einer Pre-Oxidationseinheit,
- Fig. 4: eine Ansicht wie in Fig. 3, jedoch bei einer anderen Ausführungsform,
- Fig. 5: eine Ansicht wie in Fig. 3, jedoch bei einer weiteren Ausführungsform.

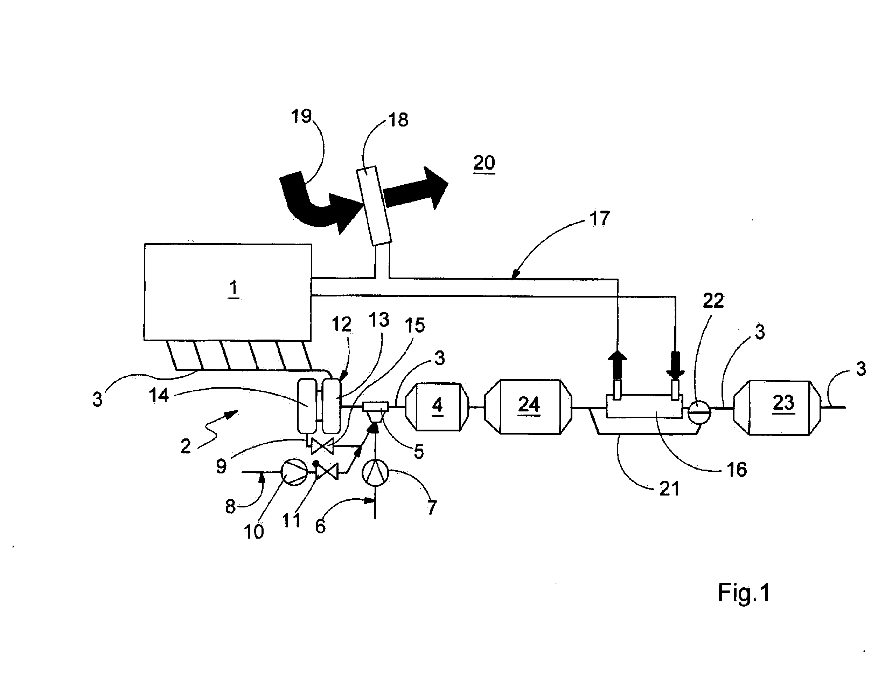

Entsprechend Fig. 1 ist eine Brennkraftmaschine 1, zum Beispiel ein Ottomotor, vorzugsweise jedoch ein Dieselmotor, mit einer Abgasanlage 2 ausgestattet und kann insbesondere in einem Kraftfahrzeug angeordnet sein. Die Abgasanlage 2 umfasst einen Abgasstrang 3, der die von der Brennkraftmaschine 1 im Betrieb erzeugten Abgase von der Brennkraftmaschine 1 wegführt. Der Abgasstrang 3 enthält zumindest einen Oxidationskatalysator 4, der zur Behandlung der von der Brennkraftmaschine 1 kommenden Abgase dient und dabei insbesondere Kraftstoffreste, die im Verbrennungsprozess in den Brennräumen der Brennkraftmaschine 1 nicht oder nicht vollständig verbrannt worden sind, im wesentlichen vollständig oxidiert und dadurch die Schadstoffemission der Brennkraftmaschine 1 reduziert.

Erfindungsgemäß ist nun die Abgasanlage mit einer Pre-Oxidationseinheit 5 ausgestattet, die im Abgasstrang 3 stromauf des Oxidationskatalysators 4 angeordnet ist. An die Pre-Oxidationseinheit 5 ist eine Sekundär-Kraftstoffversorgung 6 angeschlossen, die unabhängig von einer nicht gezeigten Kraftstoffversorgung der Brennkraftmaschine 1 arbeitet. Für einen autonomen Betrieb der Sekundär-Kraftstoffversorgung 6 auch bei ausgeschalteter Brennkraftmaschine 1 ist die Sekundär-Kraftstoffversorgung 6 hier mit einer eigenen Kraftstoffpumpe 7 ausgestattet. Die Sekundär-Kraftstoffversorgung 6 kann der Pre-Oxidationseinheit 5 Sekundär-Kraftstoff zuführen, bei dem es sich zweckmäßig um denselben Kraftstoff handelt, der auch der Brennkraftmaschine 1 zugeführt wird, also vorzugsweise um Benzin oder Diesel.

Die Pre-Oxidationseinheit 5 ist außerdem so ausgestaltet, dass sie den zugeführten Sekundär-Kraftstoff unter Zuhilfenahme eines entsprechenden Oxidators partiell oxidieren kann, wodurch teiloxidierte Zwischenprodukte entstehen, welche die Pre-Oxidationseinheit 5 in den Abgasstrang 3 einleitet. Diese partiell oxidierten Zwischenprodukte können dann im Oxidationskatalysator 4 vollständig oxidiert werden.

Als Oxidator dient vorzugsweise Sauerstoff, der grundsätzlich den mageren Abgasen der Brennkraftmaschine 1 entnommen werden kann. Vorzugsweise ist für die Pre-Oxidationseinheit 5 jedoch eine eigene Luftversorgung vorgesehen, beispielsweise in Form einer Sekundär-Luftversorgung 8 und/oder in Form einer Abzweigungsleitung 9.

Die separate Sekundär-Luftversorgung 8 arbeitet unabhängig von der Brennkraftmaschine 1, also auch bei ausgeschalteter Brennkraftmaschine 1. Hierzu umfasst die Sekundär-Luftversorgung 8 ein Gebläse bzw. eine Pumpe 10 und optional ein Rückschlagventil 11, das zur Pre-Oxidationseinheit 5 hin öffnet und zur Pumpe 10 hin sperrt.

Im Unterschied dazu ist die Abzweigungsleitung 9 an eine Verdichterseite eines Laders 12 angeschlossen und kann somit komprimierte Frischluft als Sekundär-Luft der Pre-Oxidationseinheit 5 zuführen. Dabei kann die Abzweigungsleitung 9 mit einem Ventil 15 zum Öffnen und Schließen gesteuert werden. Im gezeigten Ausführungsbeispiel handelt es sich beim Lader 12 um einen Abgasturbolader mit einer Turbine 13, die im Abgasstrang 3 stromauf der Pre-Oxidationseinheit 5 angeordnet ist, und einem Verdichter 14, von dem die Abzweigungsleitung 9 abzweigt. Es ist klar, dass es sich beim Lader 12 auch um eine andere geeignete Aufladeeinrichtung, wie zum Beispiel ein mechanischer Lader, handeln kann.

Im Abgasstrang 3 ist außerdem ein Abgas-Wärmetauscher 16 angeordnet, und zwar stromab des Oxidationskatalysators 4. Der Abgas-Wärmetauscher 16 ist dabei in einen Motor-Kühlkreis 17 eingebunden, der an sich zur Kühlung der Brennkraftmaschine 1 dient. Ein entsprechender Kühler dieses Motor-Kühlkreises 17 ist hier nicht dargestellt. Der Motor-Kühlkreis 17 enthält hier einen Heiz-Wärmetauscher 18, mit dessen Hilfe ein Luftstrom 19 erwärmt werden kann, der beispielsweise einem zu erwärmenden Raum 20 zugeführt werden kann. Bei diesem Raum 20 handelt es sich zweckmäßig um einen Fahrzeuginnenraum. Des weiteren kann der Motor-Kühlkreis 17 beim Kaltstart der Brennkraftmaschine 1 zum schnelleren Erwärmen der Brennkraftmaschine 1 genutzt werden, indem über den Abgas-Wärmetauscher 16 dem Abgas Wärme entzogen und über den Motor-Kühlkreis 17 der Brennkraftmaschine 1 zugeführt wird. Des weiteren kann für den Fall, dass die Brennkraftmaschine 1 im Normalbetrieb keine überschüssige Wärme erzeugt, der Luftstrom 19 über den Motor-Kühlkreis 17 dennoch beheizt werden, da die hierzu benötigte Wärme mit Hilfe des Abgas-Wärmetauschers 16 dem Abgas der Brennkraftmaschine 1 entnommen werden kann. Auch bei ausgeschalteter Brennkraftmaschine 1 ist eine Beheizung des Luftstroms 19 grundsätzlich möglich, da mit Hilfe der Pre-Oxidationseinheit 5 insbesondere in Verbindung mit dem Oxidationskatalysator 4 heiße Abgase erzeugt werden können, deren Wärme über den Abgas-Wärmetauscher 16 in den Motor-Kühlkreis 17 und über den Heiz-Wärmetauscher 18 in den Luftstrom 19 übertragen werden kann.

Falls eine Wärmeübertragung in den Motor-Kühlkreis 17 nicht erwünscht ist, kann eine Bypassleitung 21 aktiviert werden, die den Abgas-Wärmetauscher 16 umgeht. Die Bypassleitung 21 kann beispielsweise mit Hilfe eines Ventils 22 gesteuert werden.

Die Abgasanlage 2 kann außerdem mit einem NOₓ₋Speicherkatalysator 23 ausgestattet sein, der im Abgasstrang 3 zweckmäßig stromab des Abgas-Wärmetauschers 16 angeordnet ist. In diesem Bereich des Abgasstrangs kann die Abgasanlage 2 vorteilhafterweise auch einen SCR-Katalysator mit vorgeordnetem Harnstoff-Zudosiersystem aufweisen. Des weiteren kann die Abgasanlage 2 mit einem Partikelfilter 24 ausgestattet sein, das im Abgasstrang 3 zweckmäßig zwischen dem Oxidationskatalysator 4 und dem Abgas-Wärmetauscher 16 angeordnet ist.

Mit Hilfe der in Fig. 1 wiedergegebenen Abgasanlage 2 können mehrere unterschiedliche Funktionen realisiert werden, sofern die Abgasanlage 2 auf geeignete Weise betrieben wird. Im Folgenden wird ein erfindungsgemäßes Betriebsverfahren für die Abgasanlage 2 zusammen mit mehreren Ausführungsvarianten näher erläutert.

Bei einem Kaltstart der Brennkraftmaschine 1 kann mit der Abgasanlage 2 ein Katalysatoraufheizbetrieb realisiert werden, mit dessen Hilfe eine besonders rasche Aufheizung des Oxidationskatalysators 4 erreicht werden kann. Beim Katalysatoraufheizbetrieb wird in der Pre-Oxidationseinheit 5 Sekundär-Kraftstoff mit Oxidator, zum Beispiel Sekundär-Luft aus der Sekundär-Luftversorgung 8 oder Sekundär-Luft aus der Abzweigungsleitung 9 oder Restsauerstoff aus dem Abgas der Brennkraftmaschine 1 bei einem entsprechenden Magerbetrieb der Brennkraftmaschine 1, partiell oxidiert. Bei der partiellen Oxidation des Sekundär-Kraftstoffs entsteht zum einen Abwärme, die zum Aufheizen des Oxidationskatalysators 4 beiträgt. Zum andern entstehen bei der partiellen Oxidation des Sekundär-Kraftstoffs hochreaktive Zwischenprodukte, insbesondere kurzkettige Kohlenwasserstoffe, die im Oxidationskatalysator 4 auch bei niedrigen Temperaturen im wesentlichen vollständig oxidiert werden können. Bei dieser vollständigen Oxidation kommt es zu einer weiteren Wärmeabgabe an den Oxidationskatalysator 4. Insgesamt kann somit die Temperatur des Oxidationskatalysators 4 rasch erhöht werden. Gleichzeitig kann den vergleichsweise warmen Abgasen über den Abgas-Wärmetauscher 16 Wärme entzogen und der Brennkraftmaschine 1 zugeführt werden, wodurch auch eine beschleunigte Aufwärmung der Brennkraftmaschine 1 erreicht werden kann. Insgesamt lässt sich somit der Kaltstartvorgang erheblich verkürzen, was zum einen reduzierte Schadstoffemissionen und zum andern einen reduzierten Verschleiß sowie einen reduzierten Kaltstartverbrauch für die Brennkraftmaschine 1 bedeutet.

In Abhängigkeit der Ausgestaltung der Pre-Oxidationseinheit 5 und/oder in Abhängigkeit der Temperatur des Oxidationskatalysators 4 kann es zu Beginn des Katalysatoraufheizbetriebs zweckmäßig sein, den Sekundär-Kraftstoff in der Pre-Oxidationseinheit 5 mit dem jeweiligen Oxidator vollständig zu oxidieren, beispielsweise wenn die jeweiligen teiloxidierten Zwischenprodukte bei der jeweiligen Katalysatortemperatur im Oxidationskatalysator 4 nicht oder nicht vollständig aufoxidiert werden könnten. Durch die Volloxidation des Sekundär-Kraftstoffs in der Pre-Oxidationseinheit 5 kann die Temperatur des Oxidationskatalysators 4 rasch so weit erhöht werden, dass bei einer Umstellung der Pre-Oxidationseinheit 5 auf eine partielle Oxidation des Sekundär-Kraftstoffs die teiloxidierten Zwischenprodukte im Oxidationskatalysator 4 nunmehr vollständig oxidiert werden können.

Die Pre-Oxidationseinheit 5 kann somit zwischen einem Volloxidationsbetrieb und einem Teiloxidationsbetrieb umgeschaltet werden. Des weiteren ist es grundsätzlich möglich, die Pre-Oxidationseinheit 5 auch in einen Verdampfungsbetrieb zu schalten, sofern die Pre-Oxidationseinheit 5 zum Verdampfen des zugeführten Sekundär-Kraftstoffs ausgestaltet ist. Das Umschalten zwischen den verschiedenen Betriebszuständen der Pre-Oxidationseinheit erfolgt zweckmäßig durch Regeln der zugeführten Oxidatormenge. Beispielsweise kann der Volloxidationsbetrieb der Pre-Oxidationseinheit 5 dadurch realisiert werden, dass der Oxidator stöchiometrisch oder überstöchiometrisch zugeführt wird, das heißt, gegenüber dem zugeführten Sekundär-Kraftstoff herrscht ein Oxidatorüberschuss. Der Teiloxidationsbetrieb der Pre-Oxidationseinheit 5 kann zum Beispiel dadurch eingestellt werden, dass der Oxidator unterstöchiometrisch zugeführt wird, das heißt es herrscht ein Überschuss an Sekundär-Kraftstoff. Ein reiner Verdampfungsbetrieb lässt sich an der Pre-Oxidationseinheit 5 dadurch einstellen, dass kein Oxidator zugeführt wird. Dementsprechend kommt es in der Pre-Oxidationseinheit 5 zu keiner Oxidationsreaktion.

Die Versorgung der Pre-Oxidationseinheit 5 mit dem Oxidator bzw. mit Sekundär-Luft kann sowohl bei eingeschalteter Brennkraftmaschine 1 als auch bei ausgeschalteter Brennkraftmaschine 1 mit Hilfe der Sekundär-Luftversorgung 8 realisiert werden. Damit die Sekundär-Luftversorgung 8 auch bei eingeschalteter Brennkraftmaschine 1 eine Zuführung von Sekundär-Luft zur Pre-Oxidationseinheit 5 ermöglicht, muss die Pumpe 10 ein Druckniveau realisieren, das im Betrieb der Brennkraftmaschine 1 im Abgas stromauf des Oxidationskatalysators 4 auftreten kann. Die Pumpe 10 muss demnach entsprechend leistungsfähig ausgelegt sein. Alternativ ist es daher zweckmäßig, die Sekundär-Luftversorgung 8 nur für einen Betrieb bei ausgeschalteter Brennkraftmaschine 1 auszulegen, so dass die Pumpe 10 auf einem vergleichsweise niedrigen Druckniveau fördern kann. Die Zuführung von Sekundär-Luft bei eingeschalteter Brennkraftmaschine 1 erfolgt dann über die Abzweigungsleitung 9, die entsprechend verdichtete Frischluft bereitstellen kann. Eine Fehlströmung von Sekundär-Luft und/oder von Abgas durch die Sekundär-Luftversorgung 8 in der Gegenrichtung kann mit Hilfe des Rückschlagventils 11 vermieden werden. Sofern die Pre-Oxidationseinheit 5 beim Starten der Brennkraftmaschine 1 in Betrieb ist, muss die Versorgung der Pre-Oxidationseinheit 5 mit Sekundär-Luft aufgrund des Druckanstiegs im Abgasstrang 3 von der Sekundär-Luftzuführung 8 auf die Abzweigungsleitung 9 umgeschaltet werden. Da es sich hierbei um einen diskontinuierlichen Vorgang handelt, der mit einem sprungartigen Druckanstieg im Abgasstrang 3 einhergeht, ist es zweckmäßig, hierzu den Betrieb der Pre-Oxidationseinheit 5 vorübergehend zu unterbrechen.

Des weiteren lässt sich mit der Abgasanlage 2 ein Zuheizbetrieb realisieren, bei dem bei eingeschalteter Brennkraftmaschine 1 die Abgastemperatur dadurch erhöht werden kann, dass in der Pre-Oxidationseinheit 5 Sekundär-Kraftstoff partiell oxidiert und dem Abgastrakt 3 und somit dem Oxidationskatalysator 4 zugeführt wird. Die auf diese Weise in das Abgas eingebrachte Wärme kann mit Hilfe des Abgas-Wärmetauschers 16 dem Abgas zumindest wieder teilweise entnommen und dem Motor-Kühlkreis 17 zugeführt werden. Über den Motor-Kühlkreis 17 kann diese Wärme bedarfsabhängig z.B. der Brennkraftmaschine 1 zugeführt werden. Ebenso kann mit Hilfe des Heiz-Wärmetauschers 18 diese Wärme dem Motor-Kühlkreis 17 wieder entnommen und zum Heizen des Luftstroms 19 genutzt werden. Auf diese Weise ist es auch bei einem Kaltstart der Brennkraftmaschine 1 sowie bei niedrigen Lastzuständen der Brennkraftmaschine 1 möglich, den Fahrzeuginnenraum 20 hinreichend zu beheizen, wobei dies mit einem vergleichsweise geringen Energieverbrauch und mit wenig Schadstoffen realisiert werden kann.

Des weiteren kann bei ausgeschalteter Brennkraftmaschine 1 mit Hilfe der Abgasanlage 2 ein Standheizbetrieb realisiert werden. Hierbei wird die Pre-Oxidationseinheit 5 über die autonom arbeitende Sekundär-Luftversorgung 8 mit Sekundär-Luft und mit Hilfe der autonom arbeitenden Sekundär-Kraftstoffversorgung 6 mit Sekundär-Kraftstoff versorgt. In der Pre-Oxidationseinheit 5 findet zunächst eine Verdampfung des Sekundär-Kraftstoffs statt, was beispielsweise mittels einer elektrischen Beheizung, was weiter unten noch näher erläutert wird, realisiert werden kann. Anschließend erfolgt dann mit der Sekundär-Luft eine Gemischbildung sowie eine partielle Oxidation dieses Gemischs. Der Oxidationskatalysator 4 kann dann zur vollständigen Oxidation der teiloxidierten Zwischenprodukte genutzt werden. Auch hier ist klar, dass bei bestimmten Randbedingungen bereits in der Pre-Oxidationseinheit 5 eine vollständige Oxidation des Sekundär-Kraftstoffs realisierbar ist, zumindest bis der Oxidationskatalysator 4 eine hinreichende Betriebstemperatur erreicht hat. Auf diese Weise können bei ausgeschalteter Brennkraftmaschine 1 heiße Verbrennungsabgase erzeugt werden, deren Wärme mit Hilfe des Abgas-Wärmetauschers 16 in den Motor-Kühlkreis 17 und von diesem in den Heiz-Wärmetauscher 18 übertragen werden kann. Dort kann die bereitgestellte Wärme zum Heizen des Luftstroms 19 und somit zum Beheizen des Raums 20 genutzt werden.

Während des Standheizbetriebs ist es grundsätzlich möglich, das Partikelfilter 24 zu regenerieren. Eine derartige Standregeneration, also eine Regeneration bei ausgeschalteter Brennkraftmaschine 1 hat mehrere Vorteile. Zum einen kann das Partikelfilter 24 auf diese Weise in definierten Abständen regeneriert werden, so dass die Partikel- bzw. Rußbeladung des Partikelfilters 24 regelmäßig abgebaut wird. Auf diese Weise kann der Druckverlust, der sich bei der Durchströmung des Partikelfilters 24 im Betrieb der Brennkraftmaschine 1 einstellt, deutlich gesenkt werden. Zum anderen reicht eine übliche Vorheizzeit von etwa 5 bis 10 Minuten, während der der Standheizbetrieb vor dem Starten der Brennkraftmaschine 1 durchgeführt wird, aus, das Partikelfilter 24 vollständig zu regenerieren. Lokale Ruß- bzw. Partikelansammlungen, die bei einer unvollständigen Regeneration im Fahrbetrieb auftreten können, lassen sich durch eine solche vollständige Regeneration vermeiden. Des weiteren lassen sich durch die regelmäßige und vollständige Regeneration des Partikelfilters 24 hohe zeitliche und örtliche Temperaturspitzen innerhalb des Partikelfilters 24 zuverlässig vermeiden. Beispielsweise wird dadurch ein Filtersubstrat des Partikelfilters 24 thermisch weniger beansprucht und kann dadurch eine größere Lebensdauer erreichen. Außerdem kann aufgrund der geringeren thermischen Beanspruchung ein preiswerteres Filtersubstrat, wie zum Beispiel Cordierit, hinreichend zuverlässig eingesetzt werden. Auf diese Weise können erhebliche Kosten eingespart werden.

Darüber hinaus kann die bei der Regeneration des Partikelfilters 24, also beim Abbrand der Partikel freigesetzte Oxidationswärme im nachgeschalteten Abgas-Wärmetauscher 16 aus dem Abgas entzogen und in den Motor-Kühlkreis 17 eingeleitet werden. Hierdurch kann beispielsweise die im Standheizbetrieb realisierbare Heizleistung gesteigert bzw. der Bedarf an Sekundär-Kraftstoff in der Pre-Oxidationseinheit 5 entsprechend reduziert werden. Beispielsweise ergibt ein Partikelfilter 24 mit einem Filtervolumen von 3 Litern und einer Rußbeladung von 2 Gramm pro Liter eine Wärmemenge von 198 kJ. Bezogen auf eine Regenerationsdauer von 3 Minuten entspricht dies einer freigesetzten Wärmeleistung von 1,1 kW. Diese Wärmeleistung entspricht im Standheizbetrieb etwa einem Drittel der Leistung einer konventionellen Standheizung und würde bei eingeschalteter Brennkraftmaschine 1 in der Regel nicht ins Gewicht fallen.

Auch die zum Auslösen der Partikelfilterregeneration über die Pre-Oxidationseinheit 5 eingebrachte Wärme kann mit Hilfe des Abgas-Wärmetauschers 16 im Standheizbetrieb im wesentlichen vollständig genutzt werden, um die Brennkraftmaschine 1 vorzuheizen bzw. um den Fahrzeuginnenraum 20 aufzuheizen. Im Unterschied dazu würde bei eingeschalteter Brennkraftmaschine 1 die Regeneration des Partikelfilters bei einem herkömmlichen Kraftfahrzeug, in dessen Abgasstrang 3 kein Abgas-Wärmetauscher 16 angeordnet ist, zu einem Mehrverbrauch an Kraftstoff führen, wenn die Regeneration mit Hilfe einer zusätzlichen Kraftstoffeinspritzung, zum Beispiel durch eine innermotorische Nacheinspritzung, initiiert wird.

Eine Regeneration des Partikelfilters 24 ist auch während des Zuheizbetriebs ohne weiteres durchführbar, wobei auch dann die beim Partikelabbrand entstehende Wärme über den Abgas-Wärmetauscher 16 zum Beheizen des Raums 20 genutzt werden kann.

Besonders vorteilhaft ist dabei, dass im Grunde jeder Zuheizbetrieb und jeder Standheizbetrieb, der wenigstens etwa fünf Minuten dauert, ausreicht, das Partikelfilter 24 vollständig zu regenerieren. Das regenerierte Partikelfilter 24 besitzt einen niedrigen Durchströmungswiderstand, was die Leistungsfähigkeit der Brennkraftmaschine 1 und letztlich den Kraftstoffverbrauch reduziert.

Für den Fall, dass der Motor-Kühlkreis 17 keinen Wärmebedarf besitzt und dennoch eine Regeneration des Partikelfilters 24 durchgeführt werden muss, kann die überschüssige Wärme über die Bypassleitung 21 um den Abgas-Wärmetauscher 16 herumgeführt werden.

Ein wesentlicher Vorteil der erfindungsgemäßen Abgasanlage 2 ist - wie oben erläutert - die Möglichkeit, den Oxidationskatalysator 4 beim Kaltstart der Brennkraftmaschine 1 verhältnismäßig rasch auf eine für die Abgasbehandlung erforderliche Betriebstemperatur aufheizen zu können. Die Vorheizung oder rasche Aufheizung des Oxidationskatalysators 4 erfolgt dabei mit Hilfe der Pre-Oxidationseinheit 5 und kann dabei auf unterschiedliche Weisen realisiert werden. Im Folgenden wird zwischen einer nicht-katalytisch arbeitenden Pre-Oxidationseinheit 5 und einer katalytisch arbeitenden Pre-Oxidationseinheit 5 unterschieden.

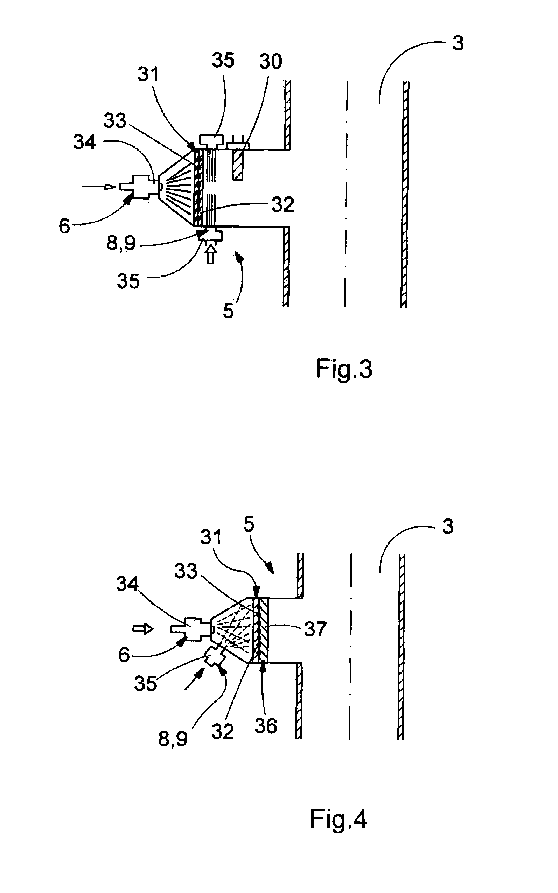

Bei einer nicht-katalytischen Pre-Oxidationseinheit 5 wird der Sekundär-Kraftstoff an einer elektrisch beheizten Verdampferfläche verdampft, anschließend mit dem Oxidator vermischt und danach das Gemisch an einer Zündeinrichtung entzündet. Eine genauere Beschreibung einer derartigen nicht-katalytischen Pre-Oxidationseinheit 5 erfolgt weiter unten mit Bezug auf Fig. 3. Bei der nicht-katalytischen Pre-Oxidationseinheit 5 kann es zu Beginn der Kaltstartphase, also zu Beginn des Katalysatoraufheizbetriebs sinnvoll sein, die Sekundär-Luft stöchiometrisch zu dosieren, um bereits in der Pre-Oxidationseinheit 5 eine möglichst vollständige Oxidation des Sekundär-Kraftstoffs zu erzielen.

Im Unterschied dazu wird bei der katalytischen Pre-Oxidationseinheit 5 das Gemisch aus Sekundär-Kraftstoff und Oxidator an einer katalytisch aktiven Fläche bzw. in einem Katalysator partiell oxidiert, wobei auch hier eine Verdampferfläche und/oder der Katalysator elektrisch beheizt sein kann. Die teiloxidierten Zwischenprodukte lassen sich am Oxidationskatalysator 4 leichter, also bei niedrigeren Temperaturen aufoxidieren.

Besonders vorteilhaft ist eine Ausgestaltung der Pre-Oxidationseinheit 5, bei welcher die partielle Oxidation des Sekundär-Kraftstoffs so durchgeführt wird, dass dabei als Zwischenprodukt Wasserstoffgas entsteht. Wasserstoff kann in einem üblichen Oxidationskatalysator 4 bereits bei Raumtemperatur umgesetzt werden, so dass hier eine besonders effiziente Aufheizung des Oxidationskatalysators 4 realisierbar ist.

Durch die Aufheizung des Oxidationskatalysators 4 durch örtliche Reaktion von teiloxidiertem Kraftstoff, insbesondere von Wasserstoff, auf dem Katalysatormaterial besteht ein weiterer Vorteil darin, dass der Oxidationskatalysator 4 jeweils in den aktiven Bereichen zuerst aufgeheizt wird. Dies ist besonders bei gealterten Oxidationskatalysatoren 4 von Bedeutung, da unter diesen Bedingungen zuerst die katalytisch noch aktiven Bereiche des Oxidationskatalysators aufgeheizt werden.

Auch der NOₓ-Speicherkatalysator 23 muss in zyklischen Abständen, je nach NOₓ-Gehalt des Abgases und Speicherkapazität, regeneriert werden. Hierzu wird ein reduzierendes Abgasgemisch, zum Beispiel mit einem Oxidator-KraftstoffVerhältnis Lambda von etwa 0,98 benötigt. Bei einem Dieselmotor bereitet die motorische Bereitstellung eines derartigen fetten Gemisches Probleme, wie zum Beispiel verstärkte Rußbildung.

Mit Hilfe der Pre-Oxidationseinrichtung 5 kann auch die Regeneration des NOₓ-Speicherkatalysators 24 besonders einfach realisiert werden. Bei eingeschalteter Brennkraftmaschine 1 kann oberhalb einer vorbestimmten Abgastemperatur, die beispielsweise bei etwa 250° C liegen kann, die Regeneration des NOₓ-Speicherkatalysators 23 z.B. dadurch realisiert werden, dass die Pre-Oxidationseinheit 5 in ihrem Verdampferbetrieb betrieben wird. Das heißt, in der Pre-Oxidationseinheit 5 wird der Sekundär-Kraftstoff verdampft und ohne Zumischung von Oxidator dem Abgas der Brennkraftmaschine zugeführt. Die Dosierung des Sekundär-Kraftstoffs wird dabei gezielt so gewählt, dass sich im Abgas die gewünschte reduzierte Atmosphäre ausbildet, die zur Regeneration des NOₓ-Speicherkatalysators 23 erforderlich ist.

Sofern die Abgastemperatur unterhalb dem genannten vorbestimmten Wert liegt, kann in der Pre-Oxidationseinheit 5 der Sekundär-Kraftstoff mit einer geeigneten Menge an Oxidator partiell oxidiert werden. Die teiloxidierten Zwischenprodukte können dann dem Abgas der Brennkraftmaschine 1 zugemischt werden, und zwar gezielt so, dass sich dort wieder die gewünschte reduzierende Atmosphäre ausbildet. Durch die partielle Oxidation des Sekundär-Kraftstoffs werden Zwischenprodukte mit erhöhter Reaktivität bereitgestellt, welche die gewünschte Regeneration des NOₓ-Speicherkatalysators 23 auch bei niedrigeren Abgastemperaturen realisieren können. Insbesondere führt die partielle Oxidation bei den üblichen Kohlenwasserstoff-Kraftstoffen zu einer Molekülkettenverkleinerung. Besonders vorteilhaft ist die Generierung von Zwischenprodukten, die gasförmigen Wasserstoff sowie Kohlenmonoxid enthalten, die sich beide in besonderer Weise zur Regeneration des NOₓ-Speicherkatalysators 23 eignen. Darüber hinaus kann durch die Teiloxidation in der Pre-Oxidationseinheit 5 und durch die Volloxidation im Oxidationskatalysator 4 die Abgastemperatur rasch auf den genannten Wert oder darüber gebracht werden, z.B. um auf die dort passende Regenerationsart umzuschalten.

Des weiteren ist es grundsätzlich auch möglich, den NOₓ₋Speicherkatalysators 23 bei ausgeschalteter Brennkraftmaschine 1 zu regenerieren, da sowohl die Sekundär-Luftzuführung 8 als auch die Sekundär-Kraftstoffzuführung 6 autonom arbeiten. Dementsprechend kann auch bei ausgeschalteter Brennkraftmaschine 1 ein reaktives Gemisch aus teiloxidierten Zwischenprodukten generiert werden, das eine für die Regeneration des NOₓ-Speicherkatalysators 23 geeignete Atmosphäre besitzt.

Bei eingeschalteter Brennkraftmaschine 1 ist es beim Erzeugen der reduzierenden Atmosphäre im Abgas erforderlich, den Restsauerstoffgehalt im Abgas der Brennkraftmaschine 1 stromauf der Pre-Oxidationseinheit 5 zu berücksichtigen. Gegebenenfalls muss für die Regeneration des NOₓ₋Speicherkatalysators 23 eine Frischluftzufuhr der Brennkraftmaschine 1 gedrosselt werden.

Die hier vorgeschlagene Anordnung des NOₓ₋Speicherkatalysators 23 stromab des Partikelfilters 24 bietet im Hinblick auf die Regeneration des Partikelfilters 24 Vorteile, da beispielsweise Stickoxide, die bei der Regeneration des Partikelfilters 24 auftreten können, im NOₓ₋Speicherkatalysators 23 aufgefangen werden können. Viel wichtiger ist jedoch der Umstand, dass Kohlenstoffoxide, die ebenfalls bei der Regeneration des Partikelfilters 24 entstehen, eine zur Regeneration des NOₓ-Speicherkatalysators 23 geeignete reduzierende Wirkung oder Atmosphäre im Abgas bereits bei deutlich geringeren Temperaturen entfalten, als z.B. Kohlenwasserstoffe. Dementsprechend kann dann eine Regeneration des Partikelfilters 24 mit einer zumindest teilweisen Regeneration des NOₓ-Speicherkatalysators 23 einhergehen.

Dennoch wird diese vorteilhafte Anordnung bei konventionellen Abgasanlagen üblicherweise vermieden, da bei einer herkömmlichen Regeneration eines Partikelfilters relativ hohe Temperaturspitzen auftreten können, die den stromab liegenden empfindlichen NOₓ-Speicherkatalysator thermisch beschädigen können.

Da bei der vorliegenden erfindungsgemäßen Abgasanlage 2 zwischen dem Partikelfilter 24 und dem NOₓ-Speicherkatalysator 23 der Abgas-Wärmetauscher 16 angeordnet ist, können heiße Abgase, die infolge der Regeneration des Partikelfilters 24 aus diesem austreten, im Abgas-Wärmetauscher 16 so weit abgekühlt werden, dass der nachfolgend angeordnete NOₓ₋Speicherkatalysators 23 vor überhöhten Temperaturen zuverlässig geschützt ist. Des weiteren führt die hier vorgeschlagene, vergleichsweise häufige Regeneration des Partikelfilters 24 während des Standheizbetriebs oder während des Zuheizbetriebs dafür, dass sich im Partikelfilter 24 jeweils nur relativ kleine Rußmengen ansammeln, die bei ihrem Abbrand keine extrem hohen Temperaturen erzeugen.

Beispielsweise wird zum Schutz des NOₓ-Speicherkatalysators 23 vor überhöhten Temperaturen die Abgastemperatur überwacht und der Abgas-Wärmetauscher 16 durch Sperren der Bypassleitung 21 aktiviert, wenn die Abgastemperatur eine vorbestimmte zulässige Höchsttemperatur für den NOₓ₋Speicherkatalysator 23 übersteigt.

Da heutige Kraftstoffe, insbesondere Dieselkraftstoff, Schwefel enthalten, kommt es während des Betriebs der Brennkraftmaschine 1 zu einer zunehmenden Schwefelvergiftung des NOₓ-Speicherkatalysators 23, das heißt, durch Sulfatbildung wird zunehmend die Speicherkapazität des NOₓ₋Speicherkatalysators 23 für NOₓ reduziert. Dementsprechend muss auch hier regelmäßig eine Desulfatisierung durchgeführt werden. Hierzu muss bei hohen Temperaturen, von zum Beispiel 700°C eine reduzierende Atmosphäre im Abgas geschaffen werden. Bei einer herkömmlichen Abgasanlage ist eine derartige Desulfatisierung mit einem vergleichsweise hohen Energieaufwand verbunden, da beispielsweise die Brennkraftmaschine über einen vergleichsweise langen Zeitraum von zum Beispiel 10 Minuten fett betrieben werden muss.

Auch hier kann die erfindungsgemäße Abgasanlage 2 Abhilfe schaffen, da mit Hilfe der Pre-Oxidationseinheit 5 in Verbindung mit dem nachgeschalteten Oxidationskatalysator 4 besonders einfach durch die Oxidation des Sekundär-Kraftstoffs ein reduzierendes Gemisch mit der erforderlichen hohen Temperatur erzeugt werden kann. Dabei lassen sich Temperatur und Lambda-Wert durch eine geeignete Kombination von Kraftstoffmenge und Luftmenge in der Pre-Oxidationseinheit 5 relativ einfach regeln. Bei eingeschalteter Brennkraftmaschine 1 ist hierbei außerdem der Restsauerstoffgehalt des Abgases stromauf der Pre-Oxidationseinheit 5 zu berücksichtigen.

Mit Hilfe der Pre-Oxidationseinheit 5 kann somit sowohl bei ausgeschalteter Brennkraftmaschine 1 als auch bei eingeschalteter Brennkraftmaschine 1, sofern diese bei geringer Last betrieben wird, eine Desulfatisierung des NOₓ₋Speicherkatalysators 23 realisiert werden. Sofern eine Desulfatisierung bei höherer Last der Brennkraftmaschine 1 durchgeführt werden soll, kann zusätzlich eine Drosselung der der Brennkraftmaschine 1 zugeführten Frischluft erforderlich sein. Zweckmäßig wird während der Aufheizung des NOₓ-Speicherkatalysators 23 die Bypassleitung 21 aktiviert, so dass das heiße reduzierende Abgasgemisch den NOₓ₋Speicherkatalysator 23 direkt beaufschlagen kann.

Ein weiterer Vorteil der erfindungsgemäßen Abgasanlage 2 wird darin gesehen, dass damit die Funktion einer Standheizung mit einem vergleichsweise geringen baulichen Aufwand realisierbar ist. Außerdem steht dabei gleichzeitig das Abgasbehandlungssystem der Brennkraftmaschine 1 voll umfänglich zur Verfügung, um die Abgase dieser "Standheizung" zu reinigen. Die mit Hilfe der Pre-Oxidationseinheit 5 in der Abgasanlage 2 realisierte Standheizungsfunktion arbeitet somit extrem schadstoffarm. Darüber hinaus können die zur Verfügung gestellten Reinigungsmittel, wie Partikelfilter 24 und NOₓ-Speicherkatalysator 23 autonom regeneriert werden.

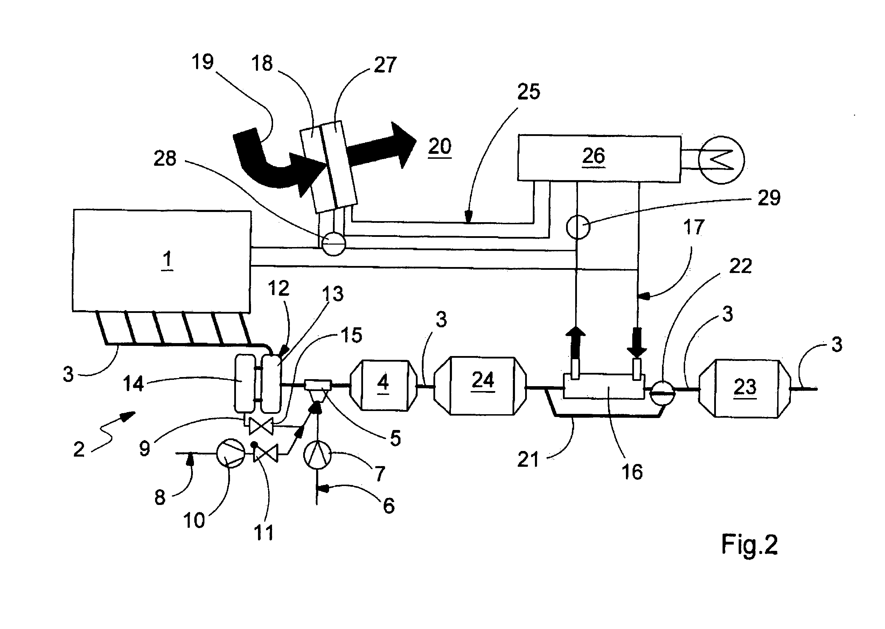

Entsprechend Fig. 2 kann an den Motor-Kühlkreis 17 außerdem ein Klima-Kühlkreis 25 angeschlossen sein. Der Klima-Kühlkreis 25 enthält eine Adsorptionskältemaschine 26 oder alternativ eine Absorptionskältemaschine 26. Der Klima-Kühlkreis 25 enthält außerdem einen Klima-Wärmetauscher 27, mit dessen Hilfe der Luftstrom 19 gekühlt werden kann. Auf diese Weise kann über den Abgas-Wärmetauscher 16 Wärme dem Abgas entzogen und über den Motor-Kühlkreis 17 der Adsorptions- oder Absorptionskältemaschine 26 zugeführt werden. Diese kann mit Hilfe der Wärme das im Klima-Kühlkreis 25 zirkulierende Kühlmittel kühlen, wodurch es möglich ist, der Luftströmung 19 Wärme zu entziehen und diese dabei zu kühlen. Letztlich kann auf diese Weise der Raum 20, vorzugsweise der Fahrzeuginnenraum 20 gekühlt werden.

Grundsätzlich ist es seit langem bekannt, unter der Nutzung von Wärme mit Hilfe eines Absorptions- wie auch mit Hilfe eines Adsorptions-Kälteprozesses Kälte zu erzeugen. Dies ist im Hinblick auf Kraftstoffverbrauch und CO₂-Bilanz eine besonders wünschenswerte Form der Kälteerzeugung. Eine Anwendung in Kraftfahrzeugen scheitert üblicherweise daran, dass eine Absorptions- oder Adsorptionskältemaschine 26 ein gegenüber der konventionellen Kompressions-Kältetechnik erhöhtes Bauvolumen besitzt. Entscheidend ist jedoch, dass zeolithische Adsorbentien, die bei herkömmlichen Adsorptionskältemaschinen zum Einsatz kommen, Desorptionstemperaturen von mindestens 150° C aufweisen, die durch das in einem herkömmlichen Motor-Kühlkreis zirkulierende Kühlmittel regelmäßig nicht bereitgestellt werden können.

Auch hier schafft die erfindungsgemäße Abgasanlage 2 Abhilfe. Denn durch die Nutzung der in den Abgase enthaltenen Wärme kann der Motor-Kühlkreis 17 zumindest bis zur Adsorptions- oder Absorptionskältemaschine 26 die erforderlichen hohen Temperaturen bereitstellen. Auf diese Weise ist es möglich, einen derartigen Adsorptions- oder Absorptionskälteprozess wirtschaftlich zu betreiben. Um die höheren Temperaturen im Motor-Kühlkreis 17 realisieren zu können, kann es zweckmäßig sein, anstelle eines herkömmlichen Kühlmittels ein anderes, für die erhöhten Temperaturen besser geeignetes Kühlmittel zu verwenden. Alternativ ist es ebenso möglich, den Abgas-Wärmetauscher 16 nicht direkt in den Motor-Kühlkreis 17 einzubinden, sondern indirekt über einen zusätzlichen Fluidkreis, der höhere Temperaturen im Fluid erträgt. Die Kopplung mit dem Motor-Kühlkreis 17 erfolgt dann über einen entsprechenden Wärmetauscher, der sowohl in den Motor-Kühlkreis 17 als auch in den genannten zusätzlichen Fluidkreis eingebunden ist.

Im vorliegenden Fall wird eine Überhitzung der Brennkraftmaschine 1 dadurch vermieden, dass zwei Stellglieder 28 und 29 vorgesehen sind, mit denen abwechselnd der Motor-Kühlkreis 17 durch die Brennkraftmaschine 1 und den Heiz-Wärmetauscher 18 einerseits oder durch die Adsorptions- oder Absorptionskältemaschine 26 andererseits hindurchgeleitet ist.

Für den Fall, dass die Abgase der Brennkraftmaschine 1 bei einem Kühlbetrieb nicht genügend Wärme enthalten, kann mit Hilfe der Pre-Oxidationseinheit 5 Sekundär-Kraftstoff partiell oxidiert und dem Oxidationskatalysator 4 zur vollständigen Oxidation zugeführt werden. Des weiteren kann auch ein Standkühlbetrieb realisiert werden, da die Pre-Oxidationseinheit 5 unabhängig von der Brennkraftmaschine 1 betrieben werden kann. Die Funktionsweise ist dabei analog zu derjenigen beim Standheizbetrieb, jedoch mit dem Unterschied, dass die den Abgasen entzogene Wärme nicht zum Aufheizen des Luftstroms 19, sondern zum Abkühlen des Luftstroms 19 genutzt werden kann.

Gleichzeitig kann beim Kühlbetrieb und/oder beim Standkühlbetrieb eine Regeneration des Partikelfilters 24 und/oder eine Regeneration des NOₓ-Speicherkatalysators 23 und/oder ein Aufheizen des Oxidationskatalysators 4 realisiert werden.

Die Kühlung der Abgase mit Hilfe des Abgas-Wärmetauschers 16, insbesondere in Verbindung mit der Absorptions- oder Adsorptionskältemaschine 26 führt dazu, dass stromab des Abgas-Wärmetauschers 16 der Volumenstrom des Abgases reduziert ist, was mit einem kleineren Druckverlust einhergeht.

Des weiteren ist bei der erfindungsgemäßen Abgasanlage 2 von besonderem Vorteil, dass die Realisierung der verschiedenen Zusatzfunktionen in der Regel ohne großen zusätzlichen Bauraumbedarf möglich ist. Insbesondere benötigt die Pre-Oxidationseinheit 5 nur einen vergleichsweise kleinen Bauraum.

Entsprechend Fig. 3 kann die Pre-Oxidationseinheit 5 mit einer Zündeinrichtung 30, z.B. in Form einer Glühkerze, ausgestattet sein. Auf diese Weise kann die jeweilige Oxidationsreaktion gestartet und aufrechterhalten werden. Die Pre-Oxidationseinheit 5 ist außerdem mit einer Verdampfereinrichtung 31 ausgestattet, die beispielsweise durch einen porösen Verdampfungskörper 32, wie z.B. ein Vlieskörper, gebildet sein kann. Der Verdampfungskörper 32 bietet dem eingedüsten oder eingespritzten flüssigen Kraftstoff eine extrem große Verdampferfläche, auf der sich der flüssige Kraftstoff verteilen kann, was die Verdampfung des Kraftstoffs unterstützt. Des weiteren kann der Verdampfungskörper 32 elektrisch beheizt sein. Eine elektrische Heizung ist in Fig. 3 mit 33 bezeichnet und kann beispielsweise durch eine in den Verdampfungskörper 32 integrierte Heizwendel gebildet sein. Die Beheizung des Verdampfungskörpers 32 und somit der Verdampfungsfläche erhöht zusätzlich die Verdampfungswirkung.

Die Sekundär-Kraftstoffzuführung 6 umfasst beispielsweise eine Einspritzdüse 34, die den Kraftstoff in Richtung auf den Verdampfungskörper 32 einbringt. Die Sekundär-Luftzuführung 8 beziehungsweise die Abzweigungsleitung 9 führt die Sekundär-Luft beispielsweise über ringförmig verteilt angeordnete Einlassdüsen 35 stromab des Verdampfungskörpers 32 in die Pre-Oxidationseinheit 5 ein. Hierdurch kann eine intensive Gemischbildung realisiert werden. Das Gemisch aus Luft und verdampftem Kraftstoff gelangt dann zur Zündeinrichtung 30. Dort entzündet sich das Gemisch, wodurch die gewünschte Oxidationsreaktion ablaufen kann. Die Pre-Oxidationseinheit 5 mündet dann in den Abgasstrang 3.

Fig. 3 zeigt somit eine nicht-katalytische Pre-Oxidationseinheit 5. Der gewählte Verdampferkörper 32 besitzt eine beheizbare Verdampfungsfläche und ist außerdem so gestaltet, dass ein Tröpfchendurchschlag bei der Kraftstoffeinspritzung verhindert werden kann. Die durch den Einspritzvorgang generierten Kraftstofftröpfchen werden am porösen Verdampfungskörper 32, der beispielsweise aus Vliesmaterial besteht, abgeschieden und verbleiben darauf bis zur vollständigen Verdampfung. Der Kraftstoffdampf tritt dann auf der stromab liegenden Seite des Verdampfungskörpers 32 aus diesem aus. Die Sekundär-Luft wird hier an der stromab liegenden Seite des Verdampfungskörper 32 in die Pre-Oxidationseinheit 5 eingebracht, was zu einer intensiven Verwirbelung und Durchmischung führt. Alternativ kann die Zugabe der Sekundär-Luft auch stromauf des Verdampfungskörpers 32 erfolgen, was die Verdampfung unterstützen kann.

Sofern über die Einlassdüsen 5 die Sekundär-Luft überstöchiometrisch zugeführt wird, kann sich an oder nach der Zündeinrichtung 30 eine Flamme bilden, was zu einer im wesentlichen vollständigen Oxidation führt. Bei unterstöchiometrischer Zufuhr von Sekundär-Luft erfolgen lediglich die erwünschten partiellen Oxidationen, die zu keiner sichtbaren Flamme führen müssen. Diese partiellen Oxidationsreaktionen können durchaus in einem Temperaturbereich ablaufen, bei dem keine Flammenbildung beobachtet werden kann.

Bei der Ausführungsform gemäß Fig. 4 ist die Pre-Oxidationseinheit 5 mit einem Katalysator 36 ausgestattet, der hier exemplarisch durch einen katalytisch beschichteten, porösen Katalysatorkörper 37 gebildet sein kann. Im vorliegenden Fall sind Verdampfungskörper 32 und Katalysatorkörper 37 unmittelbar aneinander und in Strömungsrichtung nacheinander angeordnet, wobei die Heizeinrichtung 33 zwischen den beiden Körpern 32 und 33 angeordnet ist und somit neben dem Verdampfungskörper 32 gleichzeitig auch den Katalysatorkörper 37 aufheizen kann. Die Eindüsung der Luft erfolgt bei dieser Ausführungsform stromauf des Verdampfungskörpers 32, wodurch gleichzeitig mit dem Verdampfen des Kraftstoffs die Gemischbildung realisiert wird. Auf diese Weise gelangt das Kraftstoffdampf-Luft-Gemisch in den Katalysatorkörper 37. Der Katalysatorkörper 37 ist dabei so ausgestaltet, dass er die gewünschte Oxidation des Kraftstoffs in Verbindung mit dem Oxidator durchführen kann.

Fig. 4 zeigt demnach eine katalytische Pre-Oxidationseinheit 5, bei der die Verdampfung des Kraftstoffs ebenfalls an einer beheizten Verdampferfläche erfolgt. Die partielle Oxidation kann in einem entsprechend ausgestalteten Katalysator 36 bei Temperaturen realisiert werden, die deutlich niedriger sind als im Bereich der Zündeinrichtung 30 bei der nicht-katalytischen Ausführungsform der Pre-Oxidationseinheit 5 gemäß Fig. 3. Durch eine geeignete Auswahl des jeweiligen Katalysatormaterials kann außerdem eine Selektivität für bestimmte teiloxidierte Zwischenprodukte, z.B. für Wasserstoff, erreicht werden.

Auch der Katalysatorkörper 37 kann grundsätzlich aus einem Vlieskörper bestehen, dessen Material katalytisch beschichtet ist. Durch die elektrische Beheizbarkeit des Katalysators 36 kann die partielle Oxidation am Katalysator 36 sofort mit Beginn des Kaltstarts ablaufen.

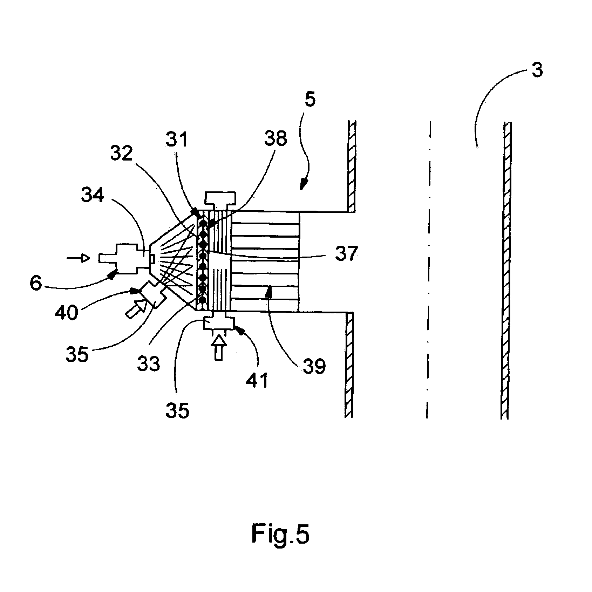

Entsprechend Fig. 5 kann die Pre-Oxidationseinheit 5 bei einer anderen Ausführungsform zwei Katalysatoren, nämlich einen ersten Katalysator 38 und einen zweiten Katalysator 39 aufweisen. Des weiteren sind zwei Oxidatorzuführungen vorgesehen, nämlich eine erste Oxidatorzuführung 40 und eine zweite Oxidatorzuführung 41. Beide Oxidatorzuführungen 40, 41 sind mit Hilfe von Einlassdüsen 35 realisiert und sind an die Sekundärluft-Zuführung 8 bzw. an die Abzweigungsleitung 9 angeschlossen.

Der erste Katalysator 38 umfasst beispielsweise wieder einen porösen Katalysatorkörper 37, der katalytisch aktiv beschichtet sein kann. Im vorliegenden Fall ist dieser Katalysatorkörper 37 wie bei der Ausführungsform gemäß Fig. 4 unmittelbar zum Verdampfungskörper 32 benachbart angeordnet. Zwischen Verdampfungskörper 32 und Katalysatorkörper 37 ist wieder die Heizeinrichtung 33 angeordnet. Der zweite Katalysator 39 besitzt beispielsweise eine monolithische Struktur und weist beispielsweise eine Vielzahl paralleler Kanäle auf, die katalytisch aktiv beschichtet sind. Der zweite Katalysator 39 ist stromab des ersten Katalysators 38 angeordnet.

Die erste Oxidatorzuführung 40 befindet sich stromauf des ersten Katalysators 38 und hier außerdem stromauf der Verdampfereinrichtung 31. Auf diese Weise gelangt das Kraftstoffdampf-Luft-Gemisch unmittelbar nach der Gemischbildung in den ersten Katalysator 38, wodurch die erwünschte partielle Oxidation zu einem ersten Teil ablaufen kann. Die zweite Oxidatorzuführung 41 ist zwischen den beiden Katalysatoren 38 und 39 positioniert, wodurch stromauf des zweiten Katalysators 39 ein weiteres zündfähiges Gemisch gebildet wird, das dann in den zweiten Katalysator 39 eintreten kann, so dass dort ein zweiter Teil der gewünschten partiellen Oxidation stattfinden kann.

Die in Fig. 5 gezeigte Ausführungsform hat den Vorteil, dass bei einem Kaltstart zunächst der erste Katalysator 38 elektrisch aufgeheizt werden kann, wodurch bei der Durchströmung des ersten Katalysators 38 zumindest ein Teil des Sekundär-Kraftstoffs partiell oxidieren kann. Dabei wird über die erste Oxidatorzuführung 40 ein relativ kleiner Anteil des insgesamt zugeführten Oxidators, also in der Regel der zugeführten Sekundär-Luft, stromauf des ersten Katalysators 38 eingeleitet. Hierdurch wird eine starke Kühlung des ersten Katalysators 38 und/oder des Oxidator-Kraftstoff-Gemischs durch die relativ kalte Sekundär-Luft vermieden, was eine sichere Funktion und schnellere Erwärmung des ersten Katalysators 38 ermöglicht. Da die Teiloxidation Wärme abgibt, kommt es dabei zu einer weiteren Erhitzung des ersten Katalysators 38. Gleichzeitig werden dadurch die entstehenden teiloxidierten Zwischenprodukte, also das Abgas des ersten Katalysators 38 erhitzt, was auch eine Aufheizung des zweiten Katalysators 39 mit sich bringt, der in der Regel größer baut und leistungsfähiger ist als der erste Katalysator 38. Ein größerer Anteil an Oxidator bzw. Luft wird dabei stromab des ersten Katalysators 38 und stromauf des zweiten Katalysators 39 über die zweite Oxidatorzuführung 41 eingeleitet. Durch die gewählte Anordnung kann insgesamt die elektrische Heizleistung zum Starten der partiellen Oxidation in der Pre-Oxidationseinheit 5 reduziert werden.

## Patentansprüche

1. Abgasanlage für eine Brennkraftmaschine (1), insbesondere in einem Kraftfahrzeug,
- mit einem Abgasstrang (3), in dem zur Behandlung der von der Brennkraftmaschine (1) kommenden Abgase ein Oxidationskatalysator (4) angeordnet ist,
- mit einer Pre-Oxidationseinheit (5),
- mit einer Sekundär-Kraftstoffversorgung (6),
- wobei die Pre-Oxidationseinheit (5) an die Sekundär-Kraftstoffversorgung (6) angeschlossen und so ausgestaltet ist, dass sie in einem Katalysatoraufheizbetrieb den zugeführten Sekundär-Kraftstoff in Verbindung mit einem Oxidator partiell oxidiert und die partiell oxidierten zwischenprodukte dem oxidationskatalysator (4) zur vollständigen Oxidation zuführt,
- wobei die Pre-Oxidationseinheit (5) eine Verdampfereinrichtung (31) enthält, die den zugeführten Sekundär-Kraftstoff verdampft,
**dadurch gekennzeichnet,**
- **dass** die Pre-Oxidationseinheit (5) im Abgasstrang (3) stromauf des Oxidationskatalysators (4) angeordnet ist,
- **dass** die Pre-Oxidationseinheit (5) so ausgestaltet ist, dass sie bei einem Kaltstart der Brennkraftmaschine (1) zu Beginn des Katalysatoraufheizbetriebs den Sekundär-Kraftstoff vollständig oxidiert,
- **dass** die Sekundär-Kraftstoffversorgung (6) so ausgestaltet ist, dass es sich bei dem Sekundär-Kraftstoff um den selben Kraftstoff handelt, der auch der Brennkraftmaschine (1) zugeführt wird.

2. Abgasanlage nach Anspruch 1,
**dadurch gekennzeichnet,**
- **dass** zur Versorgung der Pre-Oxidationseinheit (5) mit Oxidator eine Sekundär-Luftversorgung (8) vorgesehen ist, und/oder
- **dass** zur Versorgung der Pre-Oxidationseinheit (5) mit Oxidator von einem Lader (12) verdichterseitig eine Abzweigungsleitung (9) abgeht und zur Pre-Oxidationseinheit (5) führt.

3. Abgasanlage nach Anspruch 1 oder 2,
**dadurch gekennzeichnet,**
- **dass** stromab des Oxidationskatalysators (4) ein Abgas-Wärmetauscher (16) im Abgasstrang (3) angeordnet ist, der in einen Motor-Kühlkreis (17) der Brennkraftmaschine (1) eingebunden ist, und/oder
- **dass** eine steuerbare Bypassleitung (21) vorgesehen ist, die den Abgas-Wärmetauscher (16) umgeht, und/oder
- **dass** an den Motor-Kühlkreis (17) ein Klima-Kühlkreis (25) angeschlossen ist, der eine Adsorptions- oder Absorptionskältemaschine (26) sowie einen Klima-Wärmetauscher (27) enthält, der zur Kühlung eines einem zu kühlenden Raum (20), insbesondere einem Fahrzeuginnenraum, zugeführten Luftstroms (19) dient, und/oder
- **dass** der Motor-Kühlkreis (17) einen Heiz-Wärmetauscher (18) enthält, der zur Aufheizung eines einem zu erwärmenden Raum (20), insbesondere einem Fahrzeuginnenraum, zugeführten Luftstroms (19) dient, und/oder
- **dass** im Abgasstrang (3) stromab des Abgas-Wärmetauschers (16) ein NOₓ-Speicherkatalysator (23) angeordnet ist, und/oder
- **dass** im Abgasstrang (3) zwischen dem Oxidationskatalysator (4) und dem Abgas-Wärmetauscher (16) ein Partikelfilter (24) angeordnet ist.

4. Abgasanlage nach einem der Ansprüche 1 bis 3,
**dadurch gekennzeichnet,**
- **dass** die Pre-Oxidationseinheit (5) mit einer Zündeinrichtung (30) ausgestattet ist, um die partielle Oxidation zu starten und aufrecht zu erhalten, oder mit wenigstens einem Katalysator (36; 38, 39) ausgestattet ist, um die partielle Oxidation zu starten und aufrecht zu erhalten, und/oder
- **dass** der Katalysator (36; 38, 39) einen katalytisch beschichteten porösen Katalysatorkörper (37) aufweist, und/oder
- **dass** die Pre-Oxidationseinheit (5) einen ersten Katalysator (38), einen stromab davon angeordneten zweiten Katalysator (39), eine erste oxidatorzuführung (40), die den Oxidator stromauf des ersten Katalysators (39) in die Pre-Oxidationseinheit (5) eingleitet, sowie eine zweite Oxidatorzuführung (41) aufweist, die den Oxidator zwischen dem ersten Katalysator (38) und dem zweiten Katalysator (39) in die Pre-Oxidationseinheit (5) einleitet.

5. Abgasanlage nach einem der Ansprüche 1 bis 4,
**dadurch gekennzeichnet,**
**dass** die Verdampfereinrichtung (31) einen elektrisch beheizten porösen Verdampfungskörper (32) aufweist.

6. Verfahren zum Betreiben einer Abgasanlage (2) einer Brennkraftmaschine (1), insbesondere in einem Kraftfahrzeug, bei dem bei einem Katalysatoraufheizbetrieb zum Aufheizen eines Oxidationskatalysators (4) der Abgasanlage (2) bei einem Kaltstart der Brennkraftmaschine (1) Sekundär-Kraftstoff in einer stromauf des Oxidationskatalysators (4) in der Abgasanlage (2) angeordneten Pre-Oxidationseinheit (5) mit einem Oxidator partiell oxidiert und anschließend im Oxidationskatalysator (4) vollständig oxidiert wird, wobei zu Beginn des Katalysatoraufheizbetriebs der Sekundär-Kraftstoff in der Pre-Oxidationseinheit (5) mit dem Oxidator vollständig oxidiert wird, wobei als Sekundär-Kraftstoff der selbe Kraftstoff verwendet wird, mit dem auch die Brennkraftmaschine (1) betrieben wird.

7. Verfahren nach Anspruch 6,
**dadurch gekennzeichnet,**
- **dass** die Pre-Oxidationseinheit (5) durch Regeln der zugeführten Oxidatormenge zwischen einem Volloxidationsbetrieb und einem Teiloxidationsbetrieb und - sofern die Pre-Oxidationseinheit (5) zum Verdampfen des zugeführten Sekundär-Kraftstoffs ausgestattet ist - einem Verdampfungsbetrieb umschaltbar ist, und/oder
- **dass** der Volloxidationsbetrieb der Pre-Oxidationseinheit (5) **dadurch** eingestellt wird, dass der Oxidator stöchiometrisch oder überstöchiometrisch zugeführt wird, und/oder
- **dass** der Teiloxidationsbetrieb der Pre-Oxidationseinheit (5) **dadurch** eingestellt wird, dass der Oxidator unterstechiometrisch zugeführt wird, und/oder
- **dass** der Verdampfungsbetrieb der Pre-Oxidationseinheit (5) **dadurch** eingestellt wird, dass kein Oxidator zugeführt wird, und/oder
- **dass** der Oxidator durch den in Sekundär-Luft enthaltenden Sauerstoff gebildet ist, und/oder
- **dass** die Versorgung der Pre-Oxidationseinheit (5) mit Sekundär-Luft bei ausgeschalteter Brennkraftmaschine (1) mittels einer Sekundär-Luftversorgung (8) erfolgt, und/oder
- **dass** die Versorgung der Pre-Oxidationseinheit (5) mit Sekundär-Luft bei eingeschalteter Brennkraftmaschine (1) mittels einer Sekundär-Luftversorgung (8) oder durch eine Abzweigung von Luft an einer Verdichterseite eines Laders (12) der Brennkraftmaschine (1) erfolgt .

8. Verfahren nach Anspruch 6 oder 7,
**dadurch gekennzeichnet,**
- **dass** dem Abgas der Brennkraftmaschine (1) mittels eines Abgas-Wärmetauschers (16) Wärme entzogen und diese einem Fluidkreis (17) zugeführt wird, der sich zum Aufwärmen der Brennkraftmaschine (1) und/oder zum Heizen eines Raums (20), insbesondere eines Fahrzeuginnenraums, eignet, und/oder
- **dass** bei einem Zuheizbetrieb zum Erhöhen der Abgastemperatur der Brennkraftmaschine (1) in der Pre-Oxidationseinheit (5) Sekundär-Kraftstoff partiell oxidiert und dem Oxidationskatalysator (4) zugeführt wird, und/oder
- **dass** bei einem Standheizbetrieb bei ausgeschalteter Brennkraftmaschine (1) die Pre-Oxidationseinheit (5) über eine Sekundär-Luftversorgung (8) mit oxidator und über eine Sekundär-Kraftstoffversorgung (6) mit Sekundär-Kraftstoff versorgt wird, wobei in der Pre-Oxidationseinheit (5) der Sekundär-Kraftstoff mittels einer elektrischen Heizung (33) verdampft und mit der Sekundär-Luft vermischt und anschließend partiell oxidiert wird, wobei im Oxidationskatalysator (4) die teiloxidierten Zwischenprodukte vollständig oxidiert werden, und/oder
- **dass** während des Zuheizbetriebs oder während des Standheizbetriebs ein Partikelfilter (24), das zwischen Oxidationskatalysator (4) und Abgas-Wärmetauscher (16) angeordnet ist, regeneriert wird und/oder der Oxidationskatalysator (4) aufgeheizt wird.

9. Verfahren nach einem der Ansprüche 6 bis 8,
**dadurch gekennzeichnet,**
- **dass** in der Pre-Oxidationseinheit (5) der Sekundär-Kraftstoff an einer elektrisch beheizten Verdampferfläche verdampft, anschließend mit dem Oxidator vermischt und das Gemisch an einer Zündeinrichtung (30) entzündet wird, und/oder
- **dass** in der Pre-Oxidationseinheit (5) der Sekundär-Kraftstoff an einer elektrisch beheizten Verdampferfläche verdampft, anschließend mit dem Oxidator vermischt und das Gemisch an oder in einem Katalysator (36; 38, 39) partiell umgesetzt wird, und/oder
- **dass** die partielle Oxidation des Sekundär-Kraftstoffs so durchgeführt wird, dass dabei als ein Zwischenprodukt Wasserstoffgas entsteht, und/oder
- **dass** bei eingeschalteter Brennkraftmaschine (1) eine Regeneration eines stromab des Oxidationskatalysators (4) angeordneten NOₓ-Speicherkatalysators (23) oberhalb einer vorbestimmten Abgastemperatur **dadurch** realisiert wird, dass in der Pre-Oxidationseinheit (5) Sekundär-Kraftstoff verdampft und ohne Zumischung von Oxidator dem Abgas der Brennkraftmaschine (1) zugeführt wird, derart, dass sich im Abgas eine zur Regeneration des NOₓ-Speicherkatalysators (23) geeignete reduzierende Atmosphäre ausbildet, und/oder
- **dass** bei eingeschalteter Brennkraftmaschine (1) eine Regeneration eines stromab des Oxidationskatalysators (4) angeordneten NOₓ-Speicherkatalysators (23) unterhalb einer vorbestimmten Abgastemperatur **dadurch** realisiert wird, dass in der Pre-Oxidationseinheit (5) Sekundär-Kraftstoff mit Oxidator partiell oxidiert und die teiloxidierten Zwischenprodukte dem Abgas der Brennkraftmaschine (1) zugeführt werden, derart, dass sich im Abgas eine für die Regeneration des NOₓ-Speicherkatalysators (23) geeignete reduzierende Atmosphäre ausbildet, und/oder
- **dass** bei ausgeschalteter Brennkraftmaschine (1) eine Regeneration eines stromab des Oxidationskatalysators (4) angeordneten NOₓ-Speicherkatalysators (23) **dadurch** realisiert wird, dass in der Pre-Oxidationseinheit (5) Sekundär-Kraftstoff mit Oxidator partiell oxidiert wird, derart, dass sich ein Gemisch mit einer zur Regeneration des NOₓ-Speicherkatalysators (23) geeigneten reduzierenden Atmosphäre ausbildet, das dem NOₓ-Speicherkatalysator (23) zugeführt wird, und/oder
- **dass** zur Erzeugung der reduzierenden Atmosphäre im Abgas zusätzlich eine Frischluftzufuhr der Brennkraftmaschine (1) gedrosselt wird, und/oder
- **dass** die partielle Oxidation so durchgeführt wird, dass als Zwischenprodukte Wasserstoffgas und Kohlenmonoxid entstehen.

10. Verfahren nach einem der Ansprüche 6 bis 9,
**dadurch gekennzeichnet,**
- **dass** bei einer Abgastemperatur, die oberhalb einer vorbestimmten zulässigen Höchsttemperatur eines stromab des Oxidationskatalysators (4) angeordneten NOₓ-Speicherkatalysators (23) liegt, dem Abgas mittels eines zwischen Oxidationskatalysator (4) und NOₓ-Speicherkatalysator (23) angeordneten Abgas-Wärmetauschers (16) Wärme entzogen wird, und/oder
- **dass** eine Desulfatisierung eines stromab des Oxidationskatalysators (4) angeordneten NOₓ-Speicherkatalysators (23) **dadurch** realisiert wird, dass in der Pre-Oxidationseinheit (5) Sekundär-Kraftstoff mit Oxidator partiell oxidiert und im Oxidationskatalysator (4) soweit oxidiert wird, dass ein zur Desulfatisierung des NOₓ-Speicherkatalysators geeignetes reduzierendes heißes Gemisch entsteht, und/oder
- **dass** dem Abgas der Brennkraftmaschine (1) mittels eines Abgas-Wärmetauschers (16) Wärme entzogen und einer Adsorptions- und Absorptionskältemaschine (26) zugeführt wird, die zum Kühlen eines Raums (20), insbesondere eines Fahrzeuginnenraums, geeignet ist, und/oder
- **dass** bei einem Kühlbetrieb die Abgastemperatur der Brennkraftmaschine (1) **dadurch** erhöht wird, dass in der Pre-Oxidationseinheit (5) Sekundär-Kraftstoff partiell oxidiert und dem Oxidationskatalysator (4) zugeführt wird, und/oder
- **dass** bei einem Standkühlbetrieb bei ausgeschalteter Brennkraftmaschine (1) die Pre-Oxidationseinheit (5) über eine Sekundär-Luftversorgung (8) mit Oxidator und über eine Sekundär-Kraftstoffversorgung (6) mit Sekundär-Kraftstoff versorgt wird, wobei in der Pre-Oxidationseinheit (5) der Sekundär-Kraftstoff mittels einer elektrischen Heizung (33) verdampft und mit der Sekundär-Luft vermischt und anschließend partiell oxidiert wird, wobei im Oxidationskatalysator (4) die teiloxidierten Zwischenprodukte vollständig oxidiert werden, und/oder
- **dass** während des Kühlbetrieb oder während des Standkühlbetriebs ein Partikelfilter (24), das zwischen Oxidationskatalysator (4) und Abgas-Wärmetauscher (16) angeordnet ist, regeneriert wird und/oder der Oxidationskatalysator (4) aufgeheizt wird.

## Claims

1. An exhaust system for an internal combustion engine (1), more preferably in a motor vehicle,
- with an exhaust gas line (3) in which for the treatment of the exhaust gasses coming from the internal combustion engine (1) an oxidation catalytic converter (4) is arranged,
- with a pre-oxidation unit (5),
- with a secondary fuel supply (6),
- wherein the pre-oxidation unit (5) is connected to the secondary fuel supply (6) and so designed that it partially oxidizes the secondary fuel supplied in a catalytic converter heating-up operation in conjunction with an oxidant and supplies the partially oxidized intermediate products to the oxidation catalytic converter (4) for complete oxidation,
- wherein the pre-oxidation unit (5) includes an evaporator device (31) which evaporates the supplied secondary fuel,
**characterized**
- **in that** the pre-oxidation unit (5) is arranged in the exhaust gas line (3) upstream of the oxidation catalytic converter (4),
- **in that** the pre-oxidation unit (5) is designed so that upon cold starting of the internal combustion engine (1) it completely oxidizes the secondary fuel at the beginning of the catalytic converter heating-up operation,
- **in that** the secondary fuel supply (6) is designed so that the secondary fuel is the same fuel that is also supplied to the internal combustion engine (1).

2. The exhaust system according to Claim 1, **characterized**
- **in that** for supplying the pre-oxidation unit (5) with oxidant a secondary air supply (8) is provided, and/or
- **in that** for supplying the pre-oxidation unit (5) with oxidant a branch-off line (9) leaves a charger (12) on the compressor side and leads to the pre-oxidation unit (5).

3. The exhaust system according to Claim 1 or 2,
**characterized**
- **in that** downstream of the oxidation catalytic converter (4) an exhaust gas heat exchanger (16) is arranged in the exhaust gas line (3), which is incorporated in an engine cooling circuit (17) of the internal combustion engine (1) and/or
- **in that** a controllable bypass line (21) is provided which bypasses the exhaust gas heat exchanger (16), and/or
- **in that** a climate cooling circuit (25) is connected to the engine cooling circuit (17) which includes an adsorption or absorption refrigeration machine (26) as well as a climate heat exchanger (27), which serves for the cooling of an air flow (19) supplied to a space (20) to be cooled, more preferably a vehicle interior space, and/or
- **in that** the engine cooling circuit (17) includes a heating heat exchanger (18) which serves for the heating of an air flow (19) supplied to a space (20) to be heated, more preferably a vehicle interior space, and/or
- **in that** in the exhaust gas line (3) downstream of the exhaust gas heat exchanger (16) a NOₓ storage catalytic converter (23) is arranged, and/or
- **in that** in the exhaust gas line (3) between the oxidation catalytic converter (4) and the exhaust gas heat exchanger (16) a particle filter (24) is arranged.

4. The exhaust system according to any one of the Claims 1 to 3, **characterized**
- **in that** the pre-oxidation unit (5) is equipped with an ignition device (30) in order to start and maintain the partial oxidation, or is equipped with at least one catalytic converter (36; 38, 39) in order to start and maintain the partial oxidation, and/or
- **in that** the catalytic converter (36; 38, 39) comprises a catalytically coated porous catalytic converter body (37), and/or
- **in that** the pre-oxidation unit (5) comprises a first catalytic converter (38), a second catalytic converter (39) arranged downstream thereof, a first oxidant supply (40) which directs the oxidant upstream of the first catalytic converter (39) into the pre-oxidation unit (5), and a second oxidant supply (41), which directs the oxidant into the pre-oxidation unit (5) between the first catalytic converter (38) and the second catalytic converter (39).

5. The exhaust system according to any one of the Claims 1 to 4, **characterized in that** the evaporator device (31) comprises an electrically heated porous evaporation body (32).

6. The method for operating an exhaust system (2) of an internal combustion engine (1), more preferably in a motor vehicle, wherein during catalytic converter heating-up operation for the heating-up of an oxidation catalytic converter (4) of the exhaust system (2) upon cold starting of the internal combustion engine (1) secondary fuel partially oxidizes with an oxidant in a pre-oxidation unit (5) arranged in the exhaust system (2) upstream of the oxidation catalytic converter (4) and is subsequently completely oxidized in the oxidation catalytic converter (4), wherein at the start of the catalytic converter heating-up operation the secondary fuel is completely oxidized with the oxidant in the pre-oxidation unit (5), wherein as secondary fuel the same fuel that is also used to operate the internal combustion engine (1) is used.

7. The method according to Claim 6, **characterized**
- **in that** the pre-oxidation unit (5) can be switched over between full oxidation operation and part oxidation operation through regulating the supplied oxidant quantity and - provided that the pre-oxidation unit (5) is equipped for evaporating the supplied secondary fuel - evaporation operation, and/or
- **in that** full oxidation operation of the pre-oxidation unit (5) is set in that the oxidant is supplied stoichiometrically or over-stoichiometrically, and/or
- **in that** the part oxidation operation of the pre-oxidation unit (5) is set in that the oxidant is supplied under-stoichiometrically, and/or
- **in that** the evaporation operation of the pre-oxidation unit (5) is set in that no oxidant is supplied, and/or
- **in that** the oxidant is formed through the oxygen contained in secondary air and/or
- **in that** the supply of the pre-oxidation unit (5) with secondary air with internal combustion engine (1) switched off takes place by means of a secondary air supply (8), and/or
- **in that** the supply of the pre-oxidation unit (5) with secondary air with the internal combustion engine (1) switched on takes place by means of a secondary air supply (8) or through a branch-off of air on a compressor side of a charger (12) of the internal combustion engine (1).

8. The method according to Claim 6 or 7, **characterized**
- **in that** heat is extracted from the exhaust of the internal combustion engine (1) by means of an exhaust gas heat exchanger (16) and said heat is supplied to a fluid circuit (17) which is more preferably suitable for the heating-up of the internal combustion engine (1) and/or for the heating of a space (20), more preferably a vehicle interior space, and/or
- **in that** upon additional heating operation for increasing the exhaust gas temperature of the internal combustion engine (1) secondary fuel partially oxidizes in the pre-oxidation unit (5) and is supplied to the oxidation catalytic converter (4), and/or
- **in that** upon stationary heating operation with internal combustion engine (1) switched off the pre-oxidation unit (5) is supplied with oxidant via a secondary air supply (8) and with secondary fuel via a secondary fuel supply (6), wherein in the pre-oxidation unit (5) the secondary fuel evaporates by means of an electric heater (33) and is mixed with the secondary air and subsequently partially oxidized, wherein in the oxidation catalytic converter (4) the part-oxidized intermediate products are completely oxidized, and/or
- **in that** during the additional heating operation or during the stationary heating operation a particle filter (24), which is arranged between oxidation catalytic converter (4) and exhaust gas heat exchanger (16) is regenerated and/or the oxidation catalytic converter (4) heated up.

9. The method according to any one of the Claims 6 to 8,
**characterized**
- **in that** in the pre-oxidation unit (5) the secondary fuel evaporates on an electrically heated evaporator surface, is subsequently mixed with the oxidant and the mixture ignited on an ignition device (30), and/or
- **in that** in the pre-oxidation unit (5) the secondary fuel evaporates on an electrically heated evaporator surface, is subsequently mixed with the oxidant and the mixture is partially converted in a catalytic converter (36; 38, 39) and/or
- **in that** the partial oxidation of the secondary fuel is carried out so that in the process hydrogen gas is generated as an intermediate product and/or
- **in that** with internal combustion engine (1) switched on, regeneration of a NOₓ storage catalytic converter (23) arranged downstream of the oxidation catalytic converter (4) is realised above a predetermined exhaust gas temperature in that in the pre-oxidation unit (5) secondary fuel evaporates and is supplied to the exhaust gas of the internal combustion engine (1) without admixing oxidant in such a manner that in the exhaust gas a reducing atmosphere suitable for regenerating the NOₓ storage catalytic converter (23) is formed and/or
- **in that** with internal combustion engine (1) switched on, regeneration of a NOₓ storage catalytic converter (23) arranged downstream of the oxidation catalytic converter (4) is realised below a predetermined exhaust gas temperature in that in the pre-oxidation unit (5) secondary fuel partially oxidizes with oxidant and the part-oxidized intermediate products are supplied to the exhaust gas of the internal combustion engine (1) in such a manner that in the exhaust gas a reducing atmosphere suitable for regenerating the NOₓ storage catalytic converter (23) is formed, and/or
- **in that** with internal combustion engine (1) switched off, regeneration of a NOₓ storage catalytic converter (23) arranged downstream of the oxidation catalytic converter (4) is realised in that in the pre-oxidation unit (5) secondary fuel is partially oxidized with oxidant in such a manner that a mixture with a reducing atmosphere suitable for regenerating the NOₓ storage catalytic converter (23) is formed which is supplied to the NOₓ storage catalytic converter (23), and/or
- **in that** for generating the reducing atmosphere in the exhaust gas a fresh air supply of the internal combustion engine (1) is additionally throttled and/or
- **in that** the partial oxidation is carried out so that as intermediate products, hydrogen gas and carbon monoxide are generated.

10. The method according to any one of the Claims 6 to 9,
**characterized**
- **in that** with an exhaust gas temperature which is above a predetermined permissible maximum temperature of a NOₓ storage catalytic converter (23) arranged downstream of the oxidation catalytic converter (4), heat is extracted from the exhaust gas by means of an exhaust gas heat exchanger (16) arranged between oxidation catalytic converter (4) and NOₓ storage catalytic converter (23), and/or
- **in that** desulfatization of a NOₓ storage catalytic converter (23) arranged downstream of the oxidation catalytic converter (4) is realised in that in the pre-oxidation unit (5) secondary fuel partially oxidizes with oxidant and is oxidized in the oxidation catalytic converter (4) so far that a reducing hot mixture suitable for desulfatization of the NOₓ storage catalytic converter is generated, and/or
- **in that** heat is extracted from the exhaust gas of the internal combustion engine (1) by means of an exhaust gas heat exchanger (16) and supplied to an adsorption and absorption refrigeration machine (26), which is suitable for cooling a space (20), more preferably a vehicle interior space, and/or
- **in that** during cooling operation the exhaust gas temperature of the internal combustion engine (1) is increased in that in the pre-oxidation unit (5) secondary fuel is partially oxidized and supplied to the oxidation catalytic converter (4) and/or
- **in that** with stationary cooling operation with internal combustion engine (1) switched off, the pre-oxidation unit (5) is supplied with oxidant via a secondary air supply (8) and with secondary fuel via a secondary fuel supply (6), wherein in the pre-oxidation unit (5) the secondary fuel evaporates by means of an electric heater (33) and is mixed with the secondary air and subsequently partially oxidized, wherein in the oxidation catalytic converter (4) the part-oxidized intermediate products are completely oxidized, and/or
- **in that** during the cooling operation or during the stationary cooling operation a particle filter (24), which is arranged between oxidation catalytic converter (4) and exhaust gas heat exchanger (16), is regenerated and/or the oxidation catalytic converter (4) heated up.

## Revendications

1. Installation d'échappement pour un moteur à combustion interne (1), en particulier dans un véhicule, comprenant
- un tronçon de gaz d'échappement (3), dans lequel est disposé un catalyseur à oxydation (4) pour le traitement des gaz d'échappement venant du moteur à combustion interne (1),
- une unité de pré-oxydation (5),
- une alimentation en carburant secondaire (6),
- l'unité de pré-oxydation (5) étant raccordée à l'alimentation en carburant secondaire (6) et étant conçue de telle sorte que, dans un mode de réchauffage de catalyseur, elle oxyde partiellement le carburant secondaire amené en liaison avec un oxydant et amène les produits intermédiaires partiellement oxydés au catalyseur à oxydation (4) pour l'oxydation complète,
- l'unité de pré-oxydation (5) contenant un dispositif évaporateur (31), qui évapore le carburant secondaire amené,
**caractérisée en ce que**
- l'unité de pré-oxydation (5) est disposée dans le tronçon de gaz d'échappement (3) en aval du catalyseur à oxydation (4),
- **en ce que** l'unité de pré-oxydation (5) est conçue de telle sorte que, lors d'un démarrage à froid du moteur à combustion interne (1), elle oxyde complètement le carburant secondaire au début du mode de réchauffage de catalyseur,
- **en ce que** l'alimentation en carburant secondaire (6) est conçue de telle sorte que, en ce qui concerne le carburant secondaire, il s'agit du même carburant qui est amené également au moteur à combustion interne (1).

2. Installation d'échappement selon la revendication 1,
**caractérisée en ce que,**
- une alimentation en air secondaire (8) est prévue pour l'alimentation de l'unité de pré-oxydation (5) avec l'oxydant, et/ou
- **en ce qu'**une conduite de dérivation (9) part d'un turbocompresseur (12) côté compresseur pour l'alimentation de l'unité de pré-oxydation (5) en oxydant et va à l'unité de pré-oxydation (5).

3. Installation d'échappement selon la revendication 1 ou 2,
**caractérisée en ce que**
- un échangeur de chaleur à gaz d'échappement (16) est disposé en aval du catalyseur à oxydation (4) dans le tronçon de gaz à échappement (3) qui est intégré dans un circuit de refroidissement de moteur (17) du moteur à combustion interne (1), et/ou
- **en ce qu'**il est prévu une conduite de dérivation (21) contrôlable qui contourne l'échangeur de chaleur à gaz d'échappement (16), et/ou
- **en ce qu'**un circuit de refroidissement de climatisation (25) est raccordé au circuit de refroidissement de moteur (17) et contient une machine frigorifique à adsorption ou à absorption (26) ainsi qu'un échangeur de chaleur de climatisation (27) qui sert au refroidissement d'un flux d'air (19) amené à un espace (20) à refroidir, en particulier à un habitacle de véhicule, et/ou
- **en ce que** le circuit de refroidissement de moteur (17) contient un échangeur de chaleur de chauffage (18) qui sert au réchauffement d'un flux d'air (19) amené à un espace (20) à réchauffer, en particulier un habitacle de véhicule, et/ou
- **en ce qu'**un catalyseur à accumulation à NOₓ (23) est disposé dans le tronçon de gaz d'échappement (3) en aval de l'échangeur de chaleur à gaz d'échappement (16), et/ou
- **en ce qu'**un filtre à particules (24) est disposé dans le tronçon de gaz d'échappement (3) entre le catalyseur à oxydation (4) et l'échangeur de chaleur à gaz d'échappement (16).

4. Installation d'échappement selon l'une quelconque des revendications 1 à 3,
**caractérisée en ce que**
- l'unité de pré-oxydation (5) est équipée d'un dispositif d'allumage (30) pour démarrer et maintenir l'oxydation partielle ou est équipée d'au moins un catalyseur (36 ; 38, 39), afin de démarrer et de conserver l'oxydation partielle, et/ou
- **en ce que** le catalyseur (36 ; 38, 39) présente un corps catalyseur (37) poreux et revêtu de façon catalytique, et/ou
- **en ce que** l'unité de pré-oxydation (5) présente un premier catalyseur (38), un second catalyseur (39) disposé en aval du premier, une première arrivée d'oxydant (40), qui introduit l'oxydant en aval du premier catalyseur (39) dans l'unité de pré-oxydation (5), ainsi qu'une seconde arrivée d'oxydant (41), qui introduit l'oxydant entre le premier catalyseur (38) et le second catalyseur (39) dans l'unité de pré-oxydation (5).

5. Installation de gaz d'échappement selon l'une quelconque des revendications 1 à 4,
**caractérisée en ce que**
le dispositif évaporateur (31) présente un corps d'évaporation (32) chauffé électriquement et poreux.

6. Procédé pour l'exploitation d'une installation d'échappement (2) d'un moteur à combustion interne (1), en particulier dans un véhicule, dans lequel, dans un mode de réchauffage de catalyseur pour le réchauffage d'un catalyseur à oxydation (4) de l'installation d'échappement (2) lors d'un premier démarrage à froid du moteur à combustion interne (1), du carburant secondaire est oxydé partiellement dans une unité de pré-oxydation (5) disposée en amont du catalyseur à oxydation (4) dans l'installation d'échappement (2) avec un oxydant et est oxydé complètement ensuite dans le catalyseur à oxydation (4), le carburant secondaire étant oxydé complètement dans l'unité de pré-oxydation (5) avec l'oxydant au début du mode de réchauffage de catalyseur, le même carburant étant utilisé en tant que carburant secondaire, carburant avec lequel également le moteur à combustion interne (1) est exploité.

7. Procédé selon la revendication 6,
**caractérisé en ce que**
- l'unité de pré-oxydation (5) peut être commutée par le réglage de la quantité d'oxydant amené entre un mode d'oxydation complète et un mode d'oxydation partielle et - si l'unité de pré-oxydation (5) est équipée pour l'évaporation du carburant secondaire amené - un mode d'évaporation, et/ou
- **en ce que** le mode d'oxydation complète de l'unité de pré-oxydation (5) est réglé par le fait que l'oxydant est amené au plan stoechiométrique ou sur-stoechiométrique, et/ou
- **en ce que** le mode d'oxydation partielle de l'unité de pré-oxydation (5) est réglé par le fait que l'oxydant est amené de façon sous-stoechiométrique, et/ou
- **en ce que** le mode d'évaporation de l'unité de pré-oxydation (5) est réglé par le fait qu'aucun oxydant n'est amené, et/ou
- **en ce que** l'oxydant est formé par l'oxygène contenu dans l'air secondaire, et/ou
- **en ce que** l'alimentation de l'unité de pré-oxydation (5) avec de l'air secondaire sur le moteur à combustion interne (1) coupé s'effectue au moyen d'une alimentation en air secondaire (8), et/ou
- **en ce que** l'alimentation de l'unité de pré-oxydation (5) s'effectue avec de l'air secondaire lorsque le moteur à combustion interne (1) est enclenché au moyen d'une alimentation en air secondaire (8) ou par une dérivation d'air sur un côté de compresseur d'un turbocompresseur (12) du moteur à combustion interne (1).

8. Procédé selon la revendication 6 ou 7,
**caractérisé en ce que**
- de la chaleur est enlevée des gaz d'échappement du moteur à combustion interne (1) au moyen d'un échangeur de chaleur à gaz d'échappement (16) et cette chaleur est amenée à un circuit de fluide (17) qui convient pour le réchauffage du moteur à combustion interne (1) et/ou pour le chauffage d'un local (20), en particulier d'un habitacle de véhicule, et/ou
- **en ce que**, dans un mode de chauffage complémentaire, du carburant secondaire est oxydé partiellement dans l'unité de pré-oxydation (5) pour augmenter la température des gaz d'échappement du moteur à combustion interne (1) et est amené au catalyseur à oxydation (4), et/ou
- **en ce que**, dans un mode de chauffage auxiliaire avec le moteur à combustion interne (1) coupé, l'unité de pré-oxydation (5) est alimentée au moyen d'une alimentation en air secondaire (8) avec oxydant et au moyen d'une alimentation en carburant secondaire (6) avec du carburant secondaire, le carburant secondaire s'évaporant dans l'unité de pré-oxydation (5) au moyen d'un chauffage (33) électrique et étant mélangé avec l'air secondaire et oxydé ensuite partiellement, les produits intermédiaires partiellement oxydés étant complètement oxydés dans le catalyseur à oxydation (4), et/ou
- **en ce que**, dans le mode de chauffage complémentaire ou pendant le mode de chauffage auxiliaire, un filtre à particules (24), qui est disposé entre le catalyseur à oxydation (4) et l'échangeur de chaleur à gaz d'échappement (16), est régénéré et/ou le catalyseur à oxydation (4) est réchauffé.

9. Procédé selon l'une quelconque des revendications 6 à 8,
**caractérisé en ce que**
- le carburant secondaire est évaporé dans l'unité de pré-oxydation (5) sur une surface d'évaporateur chauffée électriquement, est mélangé ensuite avec l'oxydant et le mélange est enflammé sur un dispositif d'allumage (30), et/ou
- **en ce que**, dans l'unité de pré-oxydation (5), le carburant secondaire est évaporé sur une surface d'évaporateur chauffée électriquement, est mélangé ensuite avec l'oxydant et le mélange est partiellement transformé sur ou dans un catalyseur (36 ; 38, 39), et/ou
- **en ce que** l'oxydation partielle du carburant secondaire est réalisée de telle sorte que du gaz hydrogène se forme alors sous la forme d'un produit intermédiaire, et/ou
- **en ce que**, avec le moteur à combustion interne (1) enclenché, une régénération d'un catalyseur à accumulation à NOₓ (23) disposé en aval du catalyseur à oxydation (4) est réalisée au-dessus d'une température de gaz d'échappement prédéfinie par le fait que du carburant secondaire s'évapore dans l'unité de pré-oxydation (5) et est amené aux gaz d'échappement du moteur à combustion interne (1) sans mélange d'oxydant de telle sorte qu'une atmosphère réductrice, appropriée pour la régénération du catalyseur à accumulation à NOₓ (23), se forme dans les gaz d'échappement, et/ou
- **en ce que**, lorsque le moteur à combustion interne (1) est enclenché, une régénération d'un catalyseur à accumulation à NOₓ (23) disposé en aval du catalyseur à oxydation (4) est réalisée au-dessous d'une température de gaz d'échappement prédéfinie de telle sorte que, dans l'unité de pré-oxydation (5), du carburant secondaire est oxydé partiellement avec de l'oxydant et les produits intermédiaires semi-oxydés sont amenés aux gaz d'échappement du moteur à combustion interne (1) de telle sorte qu'une atmosphère réductrice appropriée pour la régénération du catalyseur à accumulation à NOₓ (23) se forme dans les gaz d'échappement et/ou
- **en ce que**, lorsque le moteur à combustion interne (1) est coupé, une régénération d'un catalyseur à accumulation à NOₓ (23) disposé en aval du catalyseur à oxydation (4) est réalisée par le fait que, dans l'unité de pré-oxydation (5), du carburant secondaire est oxydé partiellement avec de l'oxydant, de telle sorte qu'un mélange se forme avec une atmosphère réductrice appropriée pour la régénération du catalyseur à accumulation à NOₓ (23), lequel mélange est amené au catalyseur à accumulation à NOₓ (23), et/ou
- **en ce que**, pour la génération de l'atmosphère réductrice dans les gaz d'échappement, une arrivée d'air frais du moteur de combustion interne (1) est étranglée en supplément, et/ou
- **en ce que** l'oxydation partielle est réalisée de telle sorte que du gaz hydrogène et du monoxyde de carbone se forment comme produits intermédiaires.

10. Procédé selon l'une quelconque des revendications 6 à 9,
**caractérisé en ce que**
- **en ce qu'**à une température de gaz d'échappement, qui se situe au-dessus d'une température maximale autorisée prédéfinie d'un catalyseur à accumulation à NOₓ (23) disposé en aval du catalyseur à oxydation (4), de la chaleur est prélevée sur les gaz d'échappement au moyen d'un échangeur de chaleur à gaz d'échappement (16) disposé entre le catalyseur à oxydation (4) et le catalyseur à accumulation à NOₓ (23), et/ou
- **en ce qu'**un désulfatage d'un catalyseur à accumulation à NOₓ (23) disposé en aval du catalyseur à oxydation (4) est réalisé par le fait que du carburant secondaire est oxydé partiellement avec de l'oxydant dans l'unité de pré-oxydation (5) et est oxydé dans le catalyseur à oxydation (4) de telle sorte qu'un mélange chaud, réducteur et approprié pour le désulfatage du catalyseur à accumulation à NOₓ se forme et/ou
- **en ce que** de la chaleur est soutirée des gaz d'échappement du moteur à combustion interne (1) au moyen d'un échangeur de chaleur à gaz d'échappement (16) et est amenée à une machine frigorifique à adsorption et absorption (26) qui est appropriée pour le refroidissement d'un local (20), en particulier d'un habitacle de véhicule, et/ou,
- **en ce que**, dans un mode de refroidissement, la température des gaz d'échappement du moteur à combustion interne (1) est augmentée par le fait que du carburant secondaire est partiellement oxydé dans l'unité de pré-oxydation (5) et est amené au catalyseur à oxydation (4), et/ou
- **en ce que**, dans un mode de refroidissement auxiliaire avec le moteur à combustion interne (1) coupé, l'unité de pré-oxydation (5) est alimentée au moyen d'une alimentation en air secondaire (8) avec de l'oxydant et au moyen d'une alimentation en carburant secondaire (6) avec du carburant secondaire, le carburant secondaire s'évaporant au moyen d'un chauffage (33) électrique dans l'unité de pré-oxydation (5) et étant mélangé avec l'air secondaire et oxydé ensuite partiellement, les produits intermédiaires partiellement oxydés étant complètement oxydés dans le catalyseur à oxydation (4), et/ou
- **en ce que**, pendant le mode de refroidissement ou pendant le mode de refroidissement auxiliaire, un filtre à particules (24), qui est disposé entre le catalyseur à oxydation (4) et l'échangeur de chaleur à gaz d'échappement (16), est régénéré et/ou le catalyseur à oxydation (4) est réchauffé.
